# EUROPEAN PATENT APPLICATION

(11) **EP 4 369 776 A1**
(43) Date of publication of application: **15.05.2024**
(21) Application number: 22836818.9
(22) Date of filing: 01.07.2022
(51) Int. Cl.: H04W 28/02, H04W 28/08

(54) **COMPUTING POWER INFORMATION ACQUIRING METHOD AND RELATED DEVICE**

(30) Priority: 05.07.2021 CN 202110757513
(71) Applicant: Vivo Mobile Communication Co., Ltd., Dongguan, Guangdong 523863 (CN)
(72) Inventor: LV, Huazhang, Dongguan, Guangdong 523863 (CN)
(74) Representative: Conti, Marco
(86) International application number: PCT/CN2022/103317
(87) International publication number: WO 2023/280067

(57) **Abstract**

This application discloses a method for obtaining computing power information and a related device. The method for obtaining computing power information in embodiments of this application includes: A user equipment UE performs a first operation. The first operation includes at least one of the following: sending computing power information of the UE to a core network network element; receiving computing power information of a first communication device sent by the core network network element; receiving computing power information of a second communication device sent by the core network network element; and receiving computing power information that is collected by the second communication device and that is sent by the core network network element. The computing power information indicates at least one of the following: used computing power, remaining computing power, available computing power, total computing power, a computing power type, and estimated duration of occupying computing power by a computing power task.

## Description

### CROSS-REFERENCE TO RELATED APPLICATIONS

This application claims the priority of Chinese Patent Application No. 202110757513.7 filed in China on July 5, 2021, which is incorporated herein by reference in its entirety.

### TECHNICAL FIELD

This application belongs to field of communication technologies, and specifically, to a method for obtaining computing power information and a related device.

### BACKGROUND

The computing power network architecture is an important evolution trend for some networks (for example, a sixth-generation mobile communication (Sixth-generation, 6G) network). The computing power network, also referred to as a computing power-aware network, is novel network architecture provided in response to the development trend of computing network integration. However, an existing communication system does not support transmission of computing power information of a device. Therefore, during computing power task assignment, computing power tasks are randomly or roughly assigned to devices in a communication system, resulting in poor working performance of the communication system.

### SUMMARY

Embodiments of this application provide a method for obtaining computing power information and a related device, to resolve the problem that an existing communication system does not support transmission of computing power information and further causes poor working performance of a communication system.

According to a first aspect, a method for obtaining computing power information is provided, including:

A user equipment UE performs a first operation. The first operation includes at least one of the following:
sending computing power information of the UE to a core network network element;
receiving computing power information of a first communication device sent by the core network network element;
receiving computing power information of a second communication device sent by the core network network element; and
receiving computing power information that is collected by the second communication device and that is sent by the core network network element.

The computing power information indicates at least one of the following: used computing power, remaining computing power, available computing power, total computing power, a computing power type, and estimated duration of occupying computing power by a computing power task.

According to a second aspect, a method for obtaining computing power information is provided, including:

A first communication device performs a second operation. The second operation includes at least one of the following:
sending computing power information of the first communication device to a core network network element;
sending the computing power information of the first communication device to UE;
receiving computing power information of the UE sent by the core network network element; and
receiving the computing power information of the UE sent by the UE.

The computing power information indicates at least one of the following: used computing power, remaining computing power, available computing power, total computing power, a computing power type, and estimated duration of occupying computing power by a computing power task.

According to a third aspect, a method for obtaining computing power information is provided, including:

A second communication device performs a third operation. The third operation includes at least one of the following:
receiving computing power information of UE sent by the UE;
receiving the computing power information of the UE sent by a core network network element;
sending the computing power information of the UE to the core network network element;
receiving computing power information of a first communication device sent by the core network network element;
sending computing the power information of the first communication device to the core network network element;
sending the computing power information of the first communication device to the UE;
sending computing power information of the second communication device to the core network network element;
sending the computing power information of the second communication device to the UE;
sending, to the core network network element, computing power information collected by the second communication device; and
sending, to the UE, the computing power information collected by the second communication device.

The computing power information indicates at least one of the following: used computing power, remaining computing power, available computing power, total computing power, a computing power type, and estimated duration of occupying computing power by a computing power task.

According to a fourth aspect, a method for obtaining computing power information is provided, including:

A third communication device performs a fourth operation. The fourth operation includes at least one of the following:
receiving computing power information of UE sent by the UE;
receiving the computing power information of the UE sent by a core network network element;
sending the computing power information of the UE to the core network network element;
receiving computing power information of a first communication device sent by the core network network element;
sending the computing power information of the first communication device to the core network network element;
sending the computing power information of the first communication device to the UE;
sending computing power information of a second communication device to the core network network element;
sending the computing power information of the second communication device to the UE;
sending, to the core network network element, computing power information collected by the second communication device;
sending, to the UE, the computing power information collected by the second communication device;
receiving the computing power information of the second communication device sent by the second communication device; and
receiving the computing power information that is collected by the second communication device and that is sent by the second communication device.

The computing power information indicates at least one of the following: used computing power, remaining computing power, available computing power, total computing power, a computing power type, and estimated duration of occupying computing power by a computing power task.

According to a fifth aspect, an apparatus for obtaining computing power information is provided. UE includes the apparatus for obtaining computing power information, and the apparatus for obtaining computing power information includes:
a first execution module, configured to perform a first operation. The first operation includes at least one of the following:
sending computing power information of the UE to a core network network element;
receiving computing power information of a first communication device sent by the core network network element;
receiving computing power information of a second communication device sent by the core network network element; and
receiving computing power information that is collected by the second communication device and that is sent by the core network network element.

The computing power information indicates at least one of the following: used computing power, remaining computing power, available computing power, total computing power, a computing power type, and estimated duration of occupying computing power by a computing power task.

According to a sixth aspect, an apparatus for obtaining computing power information is provided. A first communication device includes the apparatus for obtaining computing power information and the apparatus for obtaining computing power information includes:
a second execution module, configured to perform a second operation. The second operation includes at least one of the following:
sending computing power information of the first communication device to a core network network element;
sending the computing power information of the first communication device to UE;
receiving computing power information of the UE sent by the core network network element; and
receiving the computing power information of the UE sent by the UE.

The computing power information indicates at least one of the following: used computing power, remaining computing power, available computing power, total computing power, a computing power type, and estimated duration of occupying computing power by a computing power task.

According to a seventh aspect, an apparatus for obtaining computing power information is provided. A second communication device includes the apparatus for obtaining computing power information and the apparatus for obtaining computing power information includes:
a third execution module, configured to perform a third operation. The third operation includes at least one of the following:
receiving computing power information of UE sent by the UE;
receiving the computing power information of the UE sent by a core network network element;
sending the computing power information of the UE to the core network network element;
receiving computing power information of a first communication device sent by the core network network element;
sending computing the power information of the first communication device to the core network network element;
sending the computing power information of the first communication device to the UE;
sending computing power information of the second communication device to the core network network element;
sending the computing power information of the second communication device to the UE;
sending, to the core network network element, computing power information collected by the second communication device; and
sending, to the UE, the computing power information collected by the second communication device.

The computing power information indicates at least one of the following: used computing power, remaining computing power, available computing power, total computing power, a computing power type, and estimated duration of occupying computing power by a computing power task.

According to an eighth aspect, an apparatus for obtaining computing power information is provided. A third communication device includes the apparatus for obtaining computing power information and the apparatus for obtaining computing power information includes:
a fourth execution module, configured to perform a fourth operation. The fourth operation includes at least one of the following:
receiving computing power information of UE sent by the UE;
receiving the computing power information of the UE sent by a core network network element;
sending the computing power information of the UE to the core network network element;
receiving computing power information of a first communication device sent by the core network network element;
sending the computing power information of the first communication device to the core network network element;
sending the computing power information of the first communication device to the UE;
sending computing power information of a second communication device to the core network network element;
sending the computing power information of the second communication device to the UE;
sending, to the core network network element, computing power information collected by the second communication device;
sending, to the UE, the computing power information collected by the second communication device;
receiving the computing power information of the second communication device sent by the second communication device; and
receiving the computing power information that is collected by the second communication device and that is sent by the second communication device.

The computing power information indicates at least one of the following: used computing power, remaining computing power, available computing power, total computing power, a computing power type, and estimated duration of occupying computing power by a computing power task.

According to a ninth aspect, UE is provided, including a processor, a memory, and a program or instructions stored in the memory and executable on the processor. In a case that the program or instructions are executed by the processor, the steps in the method for obtaining computing power information according to the first aspect are implemented.

According to a tenth aspect, UE is provided, including a processor and a communication interface. The processor or the communication interface is configured to perform a first operation. The first operation includes at least one of the following:
sending computing power information of the UE to a core network network element;
receiving computing power information of a first communication device sent by the core network network element;
receiving computing power information of a second communication device sent by the core network network element; and
receiving computing power information that is collected by the second communication device and that is sent by the core network network element.

The computing power information indicates at least one of the following: used computing power, remaining computing power, available computing power, total computing power, a computing power type, and estimated duration of occupying computing power by a computing power task.

According to an eleventh aspect, a communication device is provided, including a processor, a memory, and a program or instructions stored in the memory and executable on the processor. In a case that the program or instructions are executed by the processor, the steps in the method for obtaining computing power information according to the second aspect are implemented. Alternatively, in a case that the program or instructions are executed by the processor, the steps in the method for obtaining computing power information according to the third aspect are implemented. Alternatively, in a case that the program or instructions are executed by the processor, the steps in the method for obtaining computing power information according to the fourth aspect are implemented.

According to a twelfth aspect, a first communication device is provided, including a processor and a communication interface. The communication interface is configured to perform a second operation. The second operation includes at least one of the following:
sending computing power information of the first communication device to a core network network element;
sending the computing power information of the first communication device to UE;
receiving computing power information of the UE sent by the core network network element; and
receiving the computing power information of the UE sent by the UE.

The computing power information indicates at least one of the following: used computing power, remaining computing power, available computing power, total computing power, a computing power type, and estimated duration of occupying computing power by a computing power task.

According to a thirteenth aspect, a second communication device is provided, including a processor and a communication interface. The communication interface is configured to perform a third operation. The third operation includes at least one of the following:
receiving computing power information of UE sent by the UE;
receiving the computing power information of the UE sent by a core network network element;
sending the computing power information of the UE to the core network network element;
receiving computing power information of a first communication device sent by the core network network element;
sending computing the power information of the first communication device to the core network network element;
sending the computing power information of the first communication device to the UE;
sending computing power information of the second communication device to the core network network element;
sending the computing power information of the second communication device to the UE;
sending, to the core network network element, computing power information collected by the second communication device; and
sending, to the UE, the computing power information collected by the second communication device.

The computing power information indicates at least one of the following: used computing power, remaining computing power, available computing power, total computing power, a computing power type, and estimated duration of occupying computing power by a computing power task.

According to a fourteenth aspect, a third communication device is provided, including a processor and a communication interface. The communication interface is configured to perform a fourth operation. The fourth operation includes at least one of the following:
receiving computing power information of UE sent by the UE;
receiving the computing power information of the UE sent by a core network network element;
sending the computing power information of the UE to the core network network element;
receiving computing power information of a first communication device sent by the core network network element;
sending the computing power information of the first communication device to the core network network element;
sending the computing power information of the first communication device to the UE;
sending computing power information of a second communication device to the core network network element;
sending the computing power information of the second communication device to the UE;
sending, to the core network network element, computing power information collected by the second communication device;
sending, to the UE, the computing power information collected by the second communication device;
receiving the computing power information of the second communication device sent by the second communication device; and
receiving the computing power information that is collected by the second communication device and that is sent by the second communication device.

The computing power information indicates at least one of the following: used computing power, remaining computing power, available computing power, total computing power, a computing power type, and estimated duration of occupying computing power by a computing power task.

According to a fifteenth aspect, a readable storage medium is provided. The readable storage medium stores a program or instructions. In a case that the program or instructions are executed by the processor, the steps in the method for obtaining computing power information according to the first aspect are implemented. Alternatively, in a case that the program or instructions are executed by the processor, the steps in the method for obtaining computing power information according to the second aspect are implemented. Alternatively, in a case that the program or instructions are executed by the processor, the steps in the method for obtaining computing power information according to the third aspect are implemented. Alternatively, in a case that the program or instructions are executed by the processor, the steps in the method for obtaining computing power information according to the fourth aspect are implemented.

According to a sixteenth aspect, a chip is provided. The chip includes a processor and a communication interface. The communication interface is coupled to the processor. The processor is configured to run a program or instructions, to implement the steps of the method for obtaining computing power information according to the first aspect, implement the steps of the method for obtaining computing power information according to the second aspect, implement the steps of the method for obtaining computing power information according to the third aspect, or implement the steps of the method for obtaining computing power information according to the fourth aspect.

According to a seventeenth aspect, a computer program/program product is provided. The computer program/program product is stored in a non-volatile storage medium. The program/program product is executed by at least one processor to implement the steps of the method for obtaining computing power information according to the first aspect, the second aspect, the third aspect, or the fourth aspect.

In embodiments of this application, a user equipment UE performs a first operation. The first operation includes at least one of the following: sending computing power information of the UE to a core network network element; receiving computing power information of a first communication device sent by the core network network element; receiving computing power information of a second communication device sent by the core network network element; and receiving computing power information that is collected by the second communication device and that is sent by the core network network element. The computing power information indicates at least one of the following: used computing power, remaining computing power, available computing power, total computing power, a computing power type, and estimated duration of occupying computing power by a computing power task. In this way, the computing power information can be transmitted between the UE and the core network network element, and the UE and the core network network element can also deliver, based on the obtained computing power information, a computing power task matching the computing power information, so that working performance of the communication system can be improved.

### BRIEF DESCRIPTION OF THE DRAWINGS

FIG. 1 is a block diagram of a wireless communication system to which an embodiment of this application is applicable;
FIG. 2 is a flowchart 1 of a method for obtaining computing power information according to an embodiment of this application;
FIG. 3 is a flowchart 2 of a method for obtaining computing power information according to an embodiment of this application;
FIG. 4 is a flowchart 3 of a method for obtaining computing power information according to an embodiment of this application;
FIG. 5 is a flowchart 4 of a method for obtaining computing power information according to an embodiment of this application;
FIG. 6 is a flowchart 5 of a method for obtaining computing power information according to an embodiment of this application;
FIG. 7 is a flowchart 6 of a method for obtaining computing power information according to an embodiment of this application;
FIG. 8 is a flowchart 7 of a method for obtaining computing power information according to an embodiment of this application;
FIG. 9 is a flowchart 8 of a method for obtaining computing power information according to an embodiment of this application;
FIG. 10 is a flowchart 9 of a method for obtaining computing power information according to an embodiment of this application;
FIG. 11 is a flowchart 10 of a method for obtaining computing power information according to an embodiment of this application;
FIG. 12 is a structural diagram 1 of an apparatus for obtaining computing power information according to an embodiment of this application;
FIG. 13 is a structural diagram 2 of an apparatus for obtaining computing power information according to an embodiment of this application;
FIG. 14 is a structural diagram 3 of an apparatus for obtaining computing power information according to an embodiment of this application;
FIG. 15 is a structural diagram 4 of an apparatus for obtaining computing power information according to an embodiment of this application;
FIG. 16 is a structural diagram 1 of a communication device according to an embodiment of this application;
FIG. 17 is a structural diagram of UE according to an embodiment of this application; and
FIG. 18 is a structural diagram 2 of a communication device according to an embodiment of this application.

### DETAILED DESCRIPTION

The following clearly describes the technical solutions in embodiments of this application with reference to the accompanying drawings in embodiments of this application. Apparently, the described embodiments are some rather than all of embodiments of this application. All other embodiments obtained by a person of ordinary skill in the art based on embodiments of this application fall within the protection scope of this application.

In the specification and claims of this application, terms "first" and "second" are used to distinguish similar objects, but are not used to describe a specific sequence or order. It should be understood that, the terms used in this way are exchangeable in a proper case, so that embodiments of this application can be implemented in another order other than those shown or described herein. In addition, objects distinguished by "first" and "second" are usually of one type, and quantities of the objects are not limited. For example, there may be one or more first objects. In addition, "and/or" used in the description and claims represents at least one of connected objects. The character "/" generally indicates an "or" relationship between associated obj ects.

It is worth noting that the technologies described in embodiments of this application are not limited to the Long Term Evolution (Long Term Evolution, LTE)/LTE-advanced (LTE-Advanced, LTE-A) system, and may further be applied to other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single Carrier Frequency Division Multiple Access (Single Carrier Frequency Division Multiple Access, SC-FDMA), and other systems. The terms "system" and "network" may be used interchangeably in embodiments of this application. The technology described can be applied to the systems and radio technologies mentioned above, and can also be applied to other systems and radio technologies. In the following descriptions, for the purpose of exemplification, the New Radio (New Radio, NR) system is described, and NR terms are used in most of the following descriptions. However, the technologies may also be applied to applications in addition to NR system applications, for example, the 6th-generation (6th Generation, 6G) communication system.

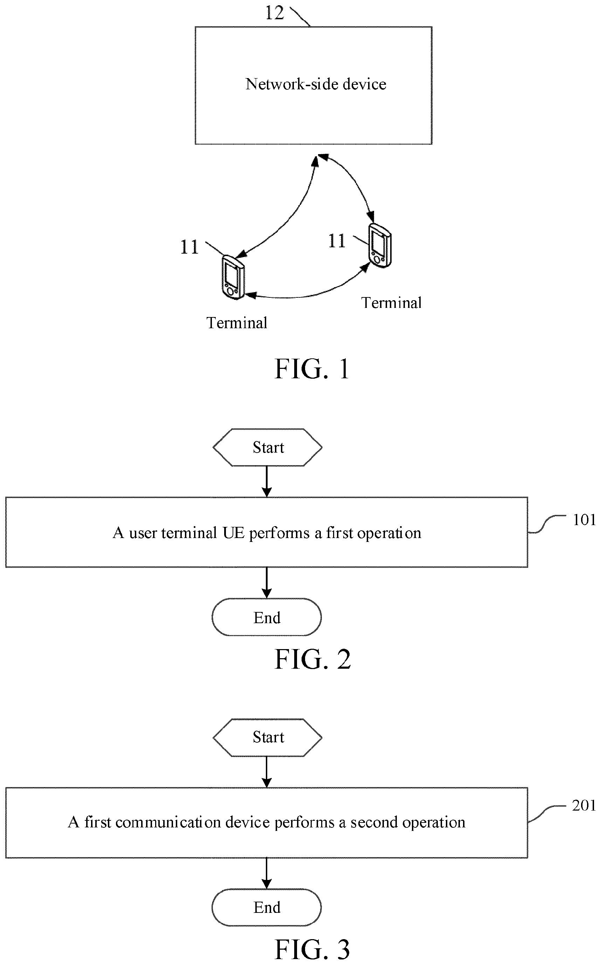

FIG. 1 is a block diagram of a wireless communication system to which an embodiment of this application is applicable. A wireless communication system includes a terminal 11 and a network-side device 12. The network-side device 12 may include a core network network element. The terminal 11 may also be referred to as a terminal device or a user equipment (User Equipment, UE). The terminal 11 may be a terminal-side device such as a mobile phone, a tablet computer (Tablet Personal Computer), a laptop computer (Laptop Computer), or referred to as a notebook computer, a personal digital assistant (Personal Digital Assistant, PDA), a palmtop computer, a netbook, an ultra-mobile personal computer (ultra-mobile personal computer, UMPC), an mobile Internet device (Mobile Internet Device, MID), a wearable device (Wearable Device), an in-vehicle device (vehicle User Equipment, VUE), or a pedestrian terminal (Pedestrian User Equipment, PUE). The wearable device includes a smartwatch, a bracelet, headphones, glasses, and the like. It should be noted that a specific type of the terminal 11 is not limited in embodiments of this application. The network-side device 12 may be a base station or a core network network element. The base station may be referred to as an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (evolved NodeB, eNB), a home NodeB, a home evolved NodeB, a WLAN (Wireless Local Area Network, WLAN) access point, a Wi-Fi node, or another proper term in the field, and is not limited to a specific term provided that a same technical effect is achieved. It should be noted that only a base station in an NR system is used as an example in embodiments of this application, but a specific type of the base station is not limited.

In addition, the core network network element may include at least one of the following: a first communication device, a second communication device, and a third communication device. The first communication device may be a 5G core network (5G core network, 5GC) network element, a 6G core network (6G core network, 6GC) network element, a network element in a core network using an other-generation communication technology, or the like, and for example, may include an access and mobility management function (Access and Mobility Management Function, AMF), a session manage function (Session Management Function, SMF), a network data analytics function (Network Data Analytics Function, NWDAF), operation, administration and maintenance (Operation Administration and Maintenance, OAM), or a computing power control function (Computing Resource Control Function, CSCF). The second communication device may be an application function (Application Function, AF). The AF may be an AF in a 5G core network, or may be an AF in a 6G core network, or may be an AF in a core network using an other-generation communication technology, or the like. The AF may be an operator AF or may be a third-party AF. In a case that the AF is an operator AF, the AF is a trusted network element and located inside the 5GC network. In a case that the AF is provided by a third party, the network element is an untrusted network element and located outside the 5GC network. The AF needs to be verified and authenticated through a network exposure function (Network Exposure Function, NEF) before it can interact with the interior of the 5GC. The third communication device may be an NWDAF or a CSCF. The NWDAF or the CSCF may be an NWDAF or a CSCF in a 5G core network, or may be an NWDAF or a CSCF in a 6G core network, or may be an NWDAF or a CSCF in a core network using an other-generation communication technology, or the like.

The method for obtaining computing power information provided in embodiments of this application is described below in detail through some embodiments and application scenarios thereof with reference to the accompanying drawings.

FIG. 2 is a flowchart 1 of a method for obtaining computing power information according to an embodiment of this application. As shown in FIG. 2, a method for obtaining computing power information includes following step:

Step 101. A user equipment UE performs a first operation, where the first operation includes at least one of the following:
sending computing power information of the UE to a core network network element;
receiving computing power information of a first communication device sent by the core network network element;
receiving computing power information of a second communication device sent by the core network network element; and
receiving computing power information that is collected by the second communication device and that is sent by the core network network element.

The computing power information indicates at least one of the following: used computing power, remaining computing power, available computing power, total computing power, a computing power type, and estimated duration of occupying computing power by a computing power task.

The foregoing computing power may be a computing speed or a computing capability. For example, the computing power may be for describing a computing speed or a computing capability of a server, a central processing unit (Central Processing Unit, CPU), a graphics processing unit(Graphics Processing Unit, GPU), a field programmable gate array (Field Programmable Gate Array, FPGA), an application-specific integrated circuit (Application Specific Integrated Circuit, ASIC), a neural-network processing unit (Neural-network Processing Unit, NPU), or a network element and a terminal that include the foregoing computing resources. The foregoing network element is configured to generate computing power.

The CPU, as a general-purpose processor, takes both computing and control into consideration. As a result, the CPU has high computing universality and can process highly complex computing, but has ordinary computing performance. Directions of improving the computing performance are: increasing a quantity of cores of the CPU, which, however, leads to a high price and limited performance improvement; increasing a frequency of the CPU, which, however, leads to higher power consumption and more heat; and modifying an architecture of the CPU to increase a quantity of computing units for floating point multiply and add operations and fused multiply add operations (Floating Point Multiply and Add Operation, Fused Multiply Add Operation, FMA), which, however, leads to a long iteration cycle.

The GPU integrates a large quantity of low-capability (compared with the GPU) computing units and a high-speed cache and is mainly good at image and video parallel computing.

The FPGA is a high-performance, low-power consumption programmable chip and may be customized for a targeted algorithm design. Compared with the CPU and the GPU, the FPGA has the following advantage: The FPGA has higher computing efficiency, but needs to be customized.

The ASIC is a dedicated chip, is different from a conventional general-purpose chip, and is a chip specifically customized for a specific need. Both a computing capability and computing efficiency of the ASIC chip can be customized according to an algorithm need. Therefore, compared with a general-purpose chip, the ASIC has advantages in the following aspects: a small volume, low power consumption, high computing performance, high computing efficiency, and the higher the shipment volume, the lower the costs. The disadvantage of the ASIC is also apparent: The algorithm is constant.

In addition, embedded neural-network processing unit (Neural-network Processing Unit, NPU) or tensor processing unit (Tensor Processing Unit, TPU) hardware that upgrades network accelerated computing has recently emerged.

The NPU is mainly applicable to reasoning and training scenarios, for example, scenarios such as industrial vision (defect inspection), machine vision (image classification and the like), speech recognition, and search recommendation.

Because computing power features of different devices may not be the same, to use computing power more efficient, the concept of heterogeneous computing has emerged in the industry. The concept of heterogeneous computing: Different types of instruction sets and different system architectures are significantly different in terms of computing unit performance and advantages, and in a case that the different types of instruction sets and different system architectures are comprehensively utilized, and a resultant system computing method is heterogeneous computing.

Optionally, a measure of computing power may be expressed by how many calculations are completed per second. For example, a computing capability is expressed by how many floating-point calculations are completed per second (Floating-point operations per second, FLOPS).

### Currently, existing manners for measuring computing power are as follows:

Turing unit: The Turing Fog Foundation is the first in the world to define an objective computing power measurement unit for a production node: Turing unit (Turing Unit, TU), and defines computing performed by a GPU 1080 Ti for 24 hours as 1 TU, which is as a measurement reference. Because a market price corresponding to 1 TU is RMB 25, a computing power value corresponding to 1 TU is RMB 25.

Hash rate: Computing power (also known as a hash rate) is a measurement unit of a processing capability of a Bitcoin network, that is, a speed at which a computer (CPU) calculates a Hash function output. The Bitcoin network needs to perform intensive mathematical and encryption-related operations for the security purpose. For example, in a case that a network reaches a hash rate of 10 Th/s, it means that the network can perform 10 trillion calculations per second.

TOPS/GOPS/MOPS is a unit of a processor operation capability. 1 TOPS represents that a processor can perform one trillion (10¹²) operations per second, and is generally used as a measure of computing power of a CPU. 1 GOPS represents that a processor can perform one billion (10⁹) operations per second. 1 MOPS represents that a processor can perform one million (10⁶) operations per second.

FLOPS: Floating-point operations per second (Floating-point operations per second, FLOPS) is a quantity of floating point operations performed per second, and is generally used for measuring a parallel computing capability of a GPU.

The foregoing computing power information may indicate a computing power status of a device. The device may be UE or a core network network element. For example, the computing power information may indicate a computing power status of UE or a core network network element. In addition, the computing power status may include at least one of the following: a computing power use status, remaining computing power, and computing power availability. For example, a computing power status of a device, such as a server, a terminal, a CPU, and a GPU, may be a computing power use status, computing power availability, or a remaining status of computing power of the device. The remaining status of computing power or the computing power availability may be represented as available computing power. The computing power use status may be represented as computing power usage. The used computing power may be used computing power of a device. The used computing power may be current used computing power of the device. The remaining computing power may be remaining computing power of a device. The remaining computing power may be current computing power of the device. The total computing power may be total computing power of a device. The total computing power may be entire computing power of the device. The total computing power may be a sum of the used computing power and the remaining computing power. The computing power type may be a type of computing power, for example, may be CPU computing power, GPU computing power, or the like. The estimated duration of occupying computing power by a computing power task may be duration during which a computing power task occupies computing power. The computing power task may be a to-be-completed work that needs to consume computing power, for example, may be a work to be completed by consuming specific computing power, for example, 10 CPUs. Alternatively, the computing power task may be a task that requires a specific operation speed, for example, a computing power task that requires 10,000 floating point operations per second.

Using an example in which the core network network element is a 5GC network element, for example, an AMF or an SMF, the UE may expect to offload some of its computing power tasks to the 5GC network element, or the 5GC network element may expect to offload some of its computing power tasks to the UE. The 5GC network element may send, in an extended protocol configuration option (extended Protocol Configuration Options, ePCO) field in a non-access stratum (Non-Access-Stratum, NAS) message, computing power information of different network elements to the UE. In this way, the UE may subsequently specify, according to computing power statuses of network elements, a specific core network network element to process or analyze a computing power task, for example, face recognition, on specific UE, to achieve cloud-network collaboration.

It should be noted that based on ubiquitous network connections, the computing power network can interconnect dynamically assigned computing resources, can enable, through unified collaborative scheduling of multidimensional resources such as a network, storage, and computing power, massive applications invoke computing resources at different places on demand and in real time, thereby implementing global optimization of connections and computing power in the network and providing a consistent user experience. The computing power network can perform unified management on computing power of all of user terminals, network element devices, server ends, and the like, to achieve collaboration. In embodiments of this application, computing power information of current UE or a current network element may be disclosed, so that during arrangement or assignment of a computing power task, a computing power status of the current network element or the current UE is fully considered, to assign the computing power task more properly.

In embodiments of this application, computing power information can be transmitted between UE and a core network network element, so that the UE or the core network network element can learn of current computing power information of its own device, to collect computing power, and can actively disclose the computing power information of its own device to expose computing power, so that another device or an other network element can perform proper delivery and division of a computing power task after obtaining the computing power information of the UE or the core network network element. For example, another device may deliver a computing power task to the UE according to its own computing power demand. The computing power demand may be a computing power resource that needs to be consumed for completing the computing power task.

It should be noted that after the UE reports the computing power information to the core network network element, the core network network element can assign, based on the computing power information of the UE, a proper computing power task to the UE for processing. After performing the processing, the UE can further send a processing result of the computing power task back to the core network. Computing power required by the computing power task assigned to the UE by the core network satisfies the current computing power status of the UE. The proper computing power task is usually a task that does not exceed maximum computing power or maximum available computing power of the core network network element or the UE.

In embodiments of this application, a user equipment UE performs a first operation. The first operation includes at least one of the following: sending computing power information of the UE to a core network network element; receiving computing power information of a first communication device sent by the core network network element; receiving computing power information of a second communication device sent by the core network network element; and receiving computing power information that is collected by the second communication device and that is sent by the core network network element. The computing power information indicates at least one of the following: used computing power, remaining computing power, available computing power, total computing power, a computing power type, and estimated duration of occupying computing power by a computing power task. In this way, the computing power information can be transmitted between the UE and the core network network element, and the UE and the core network network element can also deliver, based on the obtained computing power information, a computing power task matching the computing power information, so that working performance of the communication system can be improved.

Optionally, after the user equipment UE performs the first operation, the method further includes:
receiving a computing power task that is sent by the core network network element and that matches the computing power information of the UE;
   or
sending, to the core network network element, a computing power task matching the computing power information received by the UE.

The computing power task matching the computing power information may be a task that does not exceed maximum computing power or maximum available computing power of the device. Using an example in which the computing power information includes remaining computing power, the computing power task matching the computing power information may be a task that does not exceed the remaining computing power. Using an example in which the computing power information includes available computing power, the computing power task matching the computing power information may be a task that does not exceed the available computing power.

In addition, after computing power information of a first communication device sent by the core network network element is received, a computing power task matching the computing power information of the first communication device may be sent to the first communication device. After computing power information of a second communication device sent by the core network network element is received, a computing power task matching the computing power information of the second communication device may be sent to the second communication device. After computing power information that is collected by the second communication device and that is sent by the core network network element is received, a computing power task matching the computing power information collected by the second communication device is sent to the second communication device.

In this implementation, after the UE reports the computing power information to the core network network element, the core network network element can assign, based on the computing power information of the UE, a proper computing power task to the UE for processing. After performing completing the processing, the UE can send a processing result of the computing power task to the core network. Computing power required by the computing power task distributed to the UE by the core network satisfies the current computing power status of the UE.

Optionally, the sending the computing power information of the UE to the core network network element includes:
sending the computing power information of the UE to the core network network element through non-access stratum NAS signaling.

The core network network element may be a first communication device, a second communication device, a third communication device, or a fourth communication device. For example, the core network network element may be an SMF, an AMF, an NWDAF, a CSCF, OAM, or the like. The UE may report computing power of the UE through non-access stratum (Non-Access-Stratum, NAS) signaling, for example, a protocol data unit (Protocol Data Unit, PDU) session establishment or registration request process, so that the computing power information of the UE can be obtained by the core network network element.

It should be noted that a load (load) of UE may be defined as UE resource usage (UE resource usage). The UE resource usage may be usage of assigned virtual resources or physical resources currently in use for specific UEs (mean usage of a virtual CPU, a memory, and a disk). For example, the UE resource usage may be a percentage of the used computing power of the UE and the total computing power of the UE.

After obtaining the computing power information of the UE, the core network network element may calculate the UE resource usage and record the load of the UE. The core network network element may subsequently assign a proper computing power task to the UE according to the current load of the UE.

Using an example in which the core network network element is a 5GC network element, the UE may send the computing power information of the UE to the 5GC network element through NAS signaling.

In this implementation, the computing power information of the UE is sent to the core network network element through the non-access stratum NAS signaling, so that the computing power information of the UE can be transmitted based on original signaling.

Optionally, the NAS signaling includes at least one of the following:
a protocol data unit PDU session establishment request;
a PDU session modification request;
a PDU session establishment response;
a PDU session modification response;
a registration request; and
registration completion.

In this implementation, the NAS signaling includes a PDU session establishment request (PDUsession establishment request), a PDU session modification request (PDUsession modification request), a PDU session establishment response (PDUsession establishment Acknowledgment (Acknowledgment, ACK)), a PDU session modification response (PDUsession modification ACK), a registration request (Registration Request), and registration completion (Registration Complete), so that the computing power information of the UE can be carried in the PDU session establishment request, the PDU session modification request, the PDU session establishment response, the PDU session modification response, the registration request, and the registration completion for transmission.

Optionally, the sending the computing power information of the UE to the core network network element includes at least one of the following:
sending the computing power information of the UE to the first communication device, where the core network network element is the first communication device;
sending the computing power information of the UE to the second communication device, where the core network network element is the second communication device; and
sending the computing power information of the UE to the third communication device, where the core network network element is the third communication device.

The foregoing sending the computing power information of the UE to the first communication device may be sending the computing power information of the UE to the 5GC network element, and the UE may send the computing power information of the UE to the 5GC network element through a NAS message. After obtaining the computing power information of the UE, the 5GC network element may share the computing power information of the UE to another 5GC network element. Therefore, the computing power information of the UE can be transmitted between the 5GC network elements.

The foregoing sending the computing power information of the UE to the second communication device may be sending the computing power information of the UE to an AF. The AF may be a mobile network operator (Mobile Network Operator, MNO) AF responsible for collecting the computing power information of the UE. Therefore, the AF may expose the collected computing power information of the UE, and an object of the exposure may be a third-party application server.

The foregoing sending the computing power information of the UE to the third communication device may be sending the computing power information of the UE to an NWDAF or a CSCF. Therefore, the NWDAF or the CSCF may expose the collected computing power information of the UE. The NWDAF or the CSCF may be configured to expose the computing power information to another 5G core network network element, other UE, or a third-party application server.

Optionally, the receiving computing power information of a first communication device sent by the core network network element includes:
receiving, through at least one of the following, the computing power information of the first communication device sent by the core network network element:
an extended protocol configuration option ePCO;
PDU session establishment acceptance;
PDU session modification acceptance;
a PDU session modification command; and
registration acceptance.

Using an example in which the core network network element is a 5GC network element, the 5GC network element may send computing power information of the 5GC network element to the UE through NAS signaling, for example, an extended protocol configuration option ePCO field.

In this implementation, the core network network element may send the computing power information of the first communication device to the UE through at least one of the ePCO field, the PDU session establishment acceptance (PDUSession Establishment Accept), the PDU session modification acceptance (PDUSession Modification Accept), the PDU session modification command (PDUSession Modification Command), the registration acceptance (Registration Accept).

Optionally, the core network network element is a third communication device. Before the user equipment UE performs the first operation, the method further includes:
sending a first subscription request or a first obtaining request to the third communication device.

The first operation includes at least one of the following:
receiving the computing power information of the first communication device sent by the third communication device;
receiving the computing power information of the second communication device sent by the third communication device; and
receiving computing power information that is collected by the second communication device and that is sent by the third communication device.

The foregoing first subscription request may be for requesting to subscribe to the computing power information. The foregoing first obtaining request may be for requesting to obtain the computing power information. The third communication device may be an NWDAF or a CSCF. The first subscription request or the first obtaining request may be for requesting to subscribe to or obtain, from the third communication device, the computing power information of the first communication device, the computing power information of the second communication device, or the computing power information collected by the second communication device. The first subscription request or the first obtaining request may include an identity (Identity document, ID), an Internet Protocol address (Internet Protocol Address, IP), and the like of a communication device whose computing power information is to be obtained.

In addition, in a case that the first subscription request or the first obtaining request is for requesting to subscribe to or obtain the computing power information of the first communication device from the third communication device, the first operation includes: receiving the computing power information of the first communication device sent by the third communication device. In a case that the first subscription request or the first obtaining request is for requesting to subscribe to or obtain the computing power information of the second communication device from the third communication device, the first operation includes: receiving the computing power information of the second communication device sent by the third communication device. In a case that the first subscription request or the first obtaining request is for requesting to subscribe to or obtain, from the third communication device, the computing power information collected by the second communication device, the first operation includes: receiving the computing power information that is collected by the second communication device and that is sent by the third communication device.

Using an example in which the third communication device is an NWDAF, OAM, or a CSCF, the UE may subscribe to computing power information of some network elements stored in the NWDAF, the OAM, or the CSCF.

In this implementation, the UE sends the first subscription request or the first obtaining request to the third communication device, and obtains, from the third communication device, the computing power information of the first communication device, the computing power information of the second communication device, or the computing power information collected by the second communication device, which helps the UE to obtain computing power information of a plurality of communication devices.

Optionally, the method further includes:
sending the computing power information of the UE through an operating system (Operating System, OS) or a module chip to an application installed on the UE.

The foregoing application or an application server corresponding to the application can assign, based on the current computing power information of the UE, a proper computing power task to the UE for processing. The proper computing power task is usually a task that does not exceed maximum computing power or maximum available computing power of the UE.

In this implementation, the computing power information of the UE is sent through an operating system (Operating System, OS) or a module (module) chip to an application (Application, APP) installed on the UE, so that the application on the UE can obtain the computing power information of the UE. Then, the APP may further send the computing power information of the UE to a third-party application server end.

Optionally, before the sending the computing power information of the UE through an operating system OS or a module chip to an application installed on the UE, the method further includes:
receiving a request for obtaining the computing power information of the UE sent by the application.

In the implementation, the request for obtaining the computing power information of the UE sent by the application is received, and the computing power information of the UE is sent through the operating system or the module chip to the application installed on the UE, so that the computing power information of the UE can be sent to the application based on the request from the application.

FIG. 3 is a flowchart 2 of a method for obtaining computing power information according to an embodiment of this application. As shown in FIG. 3, a method for obtaining computing power information includes following step:

Step 201. A first communication device performs a second operation, where the second operation includes at least one of the following:
sending computing power information of the first communication device to a core network network element;
sending the computing power information of the first communication device to UE;
receiving computing power information of the UE sent by the core network network element; and
receiving the computing power information of the UE sent by the UE.

The computing power information indicates at least one of the following: used computing power, remaining computing power, available computing power, total computing power, a computing power type, and estimated duration of occupying computing power by a computing power task.

Optionally, after the first communication device performs the second operation, the method further includes:
receiving a computing power task that is sent by the core network network element or the UE and that matches the computing power information of the first communication device;
   or
sending, to the core network network element or the UE, a computing power task matching the computing power information received by the first communication device.

After the computing power information of the first communication device is sent to the core network network element, a computing power task matching the computing power information of the first communication device may be sent to the core network network element. After the computing power information of the first communication device is sent to the UE, the computing power task that is sent by the UE and that matches the computing power information of the first communication device may be received. After the computing power information of the UE sent by the core network network element is received, the computing power task matching the computing power information of the UE may be sent to the core network network element or the UE. After the computing power information of the UE sent by the UE is received, the computing power task matching the computing power information of the UE may be sent to the UE.

Optionally, after the receiving the computing power information of the UE sent by the UE, the method further includes:
sending the computing power information of the UE to the core network network element.

Optionally, the second operation includes: sending computing power information of the first communication device to a core network network element.

Before the first communication device performs the second operation, the method further includes:
receiving a second subscription request or a second obtaining request sent by the core network network element.

The core network network element includes at least one of the following:
a second communication device, a third communication device, and a fourth communication device.

The foregoing second subscription request may be for requesting to subscribe to the computing power information. The foregoing second obtaining request may be for requesting to obtain the computing power information. The second subscription request or the second obtaining request may be for requesting to subscribe to or obtain the computing power information of the first communication device. The first communication device may be a 5GC network element. The fourth communication device may be a 5GC network element other than the first communication device.

In this implementation, the second subscription request or the second obtaining request sent by the second communication device is received, and the computing power information of the first communication device is sent to the second communication device. Additionally/Alternatively, the second subscription request or the second obtaining request sent by the third communication device is received, and the computing power information of the first communication device is sent to the third communication device. Additionally/Alternatively, the second subscription request or second obtaining request sent by the fourth communication device is received, and the computing power information of the first communication device is sent to the fourth communication device. Therefore, the computing power information of the first communication device can be exposed.

Optionally, the receiving computing power information of the UE sent by the core network network element includes:
sending a first subscription request or a first obtaining request to the third communication device; and
receiving the computing power information of the UE sent by the third communication device, where the core network network element is the third communication device.

The first subscription request or the first obtaining request may be for requesting to subscribe to or obtain the computing power information of the UE from the third communication device. A parameter, such as subscription permanent identifier (Subscription Permanent Identifier, SUPI), a generic public subscription identifier (Generic Public Subscription Identifier, GPSI), or group identifier (Group ID), of the UE may be carried in the first subscription request or the first obtaining request, to request the computing power information of the UE from the third communication device.

In this implementation, the first communication device sends the first subscription request or the first obtaining request to the third communication device, and receives the computing power information of the UE sent by the third communication device, so that the third communication device expose the computing power information of the UE to the first communication device.

It should be noted that this embodiment serves as an implementation of the first communication device corresponding to the embodiment shown in FIG. 2. For the specific implementation of this embodiment, refer to related descriptions of the embodiment shown in FIG. 2. To avoid repeated descriptions, details are not described in this embodiment again. In this embodiment, working performance of the communication system can be improved.

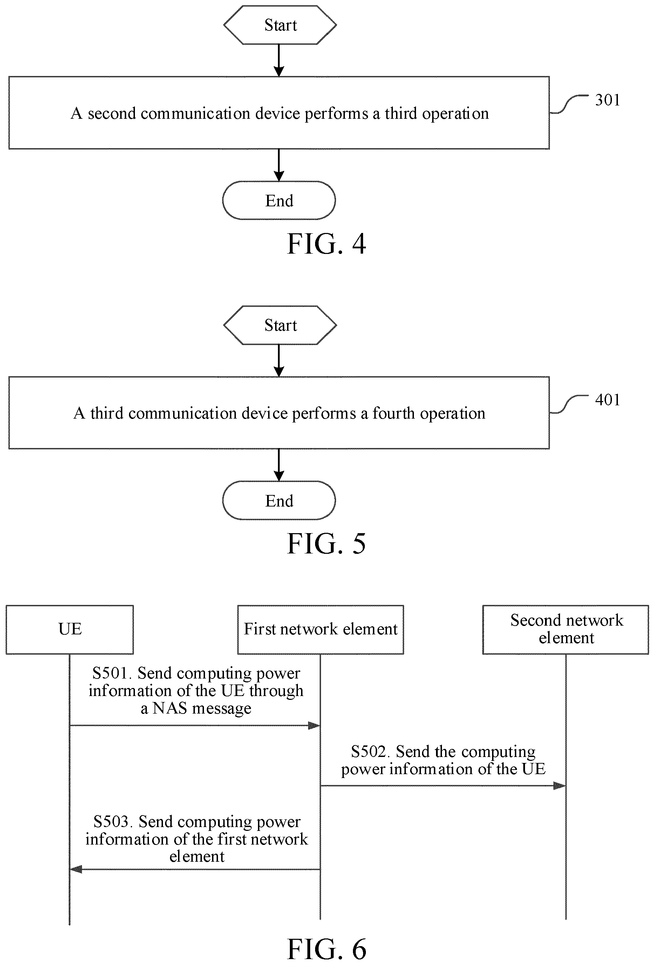

FIG. 4 is a flowchart 3 of a method for obtaining computing power information according to an embodiment of this application. As shown in FIG. 4, a method for obtaining computing power information includes following step:

Step 301: A second communication device performs a third operation, where the third operation includes at least one of the following:
performing, by a second communication device, a third operation, where the third operation includes at least one of the following:
receiving computing power information of UE sent by the UE;
receiving the computing power information of the UE sent by a core network network element;
sending the computing power information of the UE to the core network network element;
receiving computing power information of a first communication device sent by the core network network element;
sending computing the power information of the first communication device to the core network network element;
sending the computing power information of the first communication device to the UE;
sending computing power information of the second communication device to the core network network element;
sending the computing power information of the second communication device to the UE;
sending, to the core network network element, computing power information collected by the second communication device; and
sending, to the UE, the computing power information collected by the second communication device.

The computing power information indicates at least one of the following: used computing power, remaining computing power, available computing power, total computing power, a computing power type, and estimated duration of occupying computing power by a computing power task.

For example, the second communication device may be a mobile network operator (Mobile Network Operator, MNO) AF. The MNO AF may be responsible for collecting the computing power information of the UE. The UE may establish a connection with the MNO AF. The MNO AF may be specifically configured to collect the computing power information of the UE. A network element, such as an NWDAF or a CSCF, may use Naf_EventExposure Subscribe signaling to subscribe to the computing power information of the UE collected by the AF.

Optionally, after the second communication device performs the third operation, the method further includes:
receiving a computing power task that is sent by the core network network element or the UE and that matches the computing power information of the second communication device;
   or
sending, to the core network network element or the UE, a computing power task matching the computing power information received by the second communication device.

After the computing power information of the UE sent by the UE is received, the computing power task matching the computing power information of the UE may be sent to the UE. After the computing power information of the UE sent by the core network network element is received, the computing power task matching the computing power information of the UE may be sent to the core network network element or the UE. After the computing power information of the first communication device sent by the core network network element is received, a computing power task matching the computing power information of the first communication device may be sent to the core network network element or the first communication device.

In this implementation, the second communication device can collect computing power information of each core network network element or the UE for another core network network element, a terminal, or a third-party application to perform information invocation. The another core network network element, the terminal, or the third-party application may assign, based on the computing power information, a proper computing power task to the core network network element or the terminal for processing.

Optionally, the core network network element is a third communication device. Before the second communication device performs the third operation, the method further includes:
receiving a third subscription request or a third obtaining request sent by the third communication device.

The third operation includes at least one of the following:
sending the computing power information of the UE to the third communication device;
sending the computing power information of the second communication device to the third communication device; and
sending, to the third communication device, the computing power information collected by the second communication device.

The foregoing third subscription request may be for requesting to subscribe to the computing power information. The foregoing third obtaining request may be for requesting to obtain the computing power information. The third subscription request or the third obtaining request may be for requesting to subscribe to or obtain, from the second communication device, the computing power information of the UE, the computing power information of the second communication device, or the computing power information collected by the second communication device. The third subscription request or the third obtaining request may include an ID, an IP address, or the like of a device of to-be-obtained computing power information.

In addition, in a case that the third subscription request or the third obtaining request is for requesting to subscribe to or obtain the computing power information of the UE from the second communication device, the third operation includes: sending the computing power information of the UE to the third communication device. In a case that the third subscription request or the third obtaining request is for requesting to subscribe to or obtain the computing power information of the second communication device from the second communication device, the third operation includes: sending the computing power information of the second communication device to the third communication device. In a case that the third subscription request or the third obtaining request is for requesting to subscribe to or obtain, from the second communication device, the computing power information collected by the second communication device, the third operation includes: sending, to the third communication device, the computing power information collected by the second communication device.

In this implementation, the third subscription request or the third obtaining request sent by the third communication device is received, the third operation includes at least one of the following: sending the computing power information of the UE to the third communication device; sending the computing power information of the second communication device to the third communication device; and sending, to the third communication device, the computing power information collected by the second communication device. Therefore, the second communication device can expose, to the third communication device, the computing power information of the UE, the computing power information of the second communication device, and the computing power information collected by the second communication device.

Optionally, the core network network element is the first communication device. The receiving computing power information of a first communication device sent by the core network network element includes:
sending a second subscription request or a second obtaining request to the first communication device; and
receiving the computing power information of the first communication device sent by the first communication device.

Optionally, the core network network element is the third communication device. The receiving computing power information of a first communication device sent by the core network network element includes:
sending a first subscription request or a first obtaining request to the third communication device; and
receiving the computing power information of the first communication device sent by the third communication device.

In this implementation, the first subscription request or the first obtaining request may be for requesting to subscribe to or obtain the computing power information of the first communication device from the third communication device, so that the third communication device can expose the computing power information of the first communication device to the second communication device.

It should be noted that this embodiment serves as an implementation of the second communication device corresponding to the embodiments shown in FIG. 2 and FIG. 3. For the specific implementation of this embodiment, refer to related descriptions of the embodiments shown in FIG. 2 and FIG. 3. To avoid repeated descriptions, details are not described in this embodiment again. In this embodiment, working performance of the communication system can be improved.

FIG. 5 is a flowchart 4 of a method for obtaining computing power information according to an embodiment of this application. As shown in FIG. 5, a method for obtaining computing power information includes following step:

Step 401: A third communication device performs a fourth operation, where the fourth operation includes at least one of the following:
receiving computing power information of UE sent by the UE;
receiving the computing power information of the UE sent by a core network network element;
sending the computing power information of the UE to the core network network element;
receiving computing power information of a first communication device sent by the core network network element;
sending the computing power information of the first communication device to the core network network element;
sending the computing power information of the first communication device to the UE;
sending computing power information of a second communication device to the core network network element;
sending the computing power information of the second communication device to the UE;
sending, to the core network network element, computing power information collected by the second communication device;
sending, to the UE, the computing power information collected by the second communication device;
receiving the computing power information of the second communication device sent by the second communication device; and
receiving the computing power information that is collected by the second communication device and that is sent by the second communication device.

the computing power information indicates at least one of the following: used computing power, remaining computing power, available computing power, total computing power, a computing power type, and estimated duration of occupying computing power by a computing power task.

Optionally, after the third communication device performs the fourth operation, the method further includes:
receiving a computing power task that is sent by the core network network element or the UE and that matches computing power information of the third communication device;
   or
sending, to the core network network element, the UE, or the second communication device, a computing power task matching the computing power information received by the third communication device.

After the computing power information of the UE sent by the UE is received, the computing power task matching the computing power information of the UE may be sent to the UE. After the computing power information of the UE sent by the core network network element is received, the computing power task matching the computing power information of the UE may be sent to the core network network element or the UE. After the computing power information of the first communication device sent by the core network network element is received, a computing power task matching the computing power information of the first communication device may be sent to the core network network element or the first communication device. After computing power information of the second communication device sent by the second communication device is received, a computing power task matching the computing power information of the second communication device is sent to the second communication device. After computing power information that is collected by the second communication device and that is sent by the second communication device is received, a computing power task matching the computing power information collected by the second communication device is sent to the second communication device.

In this implementation, the third communication device can send the computing power information of the core network network element or the terminal to another core network network element, UE, or a third-party application. The another core network network element, the UE, or the third-party application may assign, based on the computing power information, a proper computing power task to the core network network element or the terminal for processing.

Optionally, before the third communication device performs the fourth operation, the method further includes:
receiving a first subscription request or a first obtaining request sent by the UE.

The fourth operation includes at least one of the following:
sending the computing power information of the first communication device to the UE;
sending the computing power information of the second communication device to the UE; and
sending the computing power information collected by the second communication device to the UE.

Optionally, the core network network element is the first communication device. The receiving computing power information of a first communication device sent by the core network network element includes:
sending a second subscription request or a second obtaining request to the first communication device; and
receiving the computing power information of the first communication device sent by the first communication device.

Optionally, the core network network element is the first communication device. The sending the computing power information of the UE to the core network network element includes:
receiving a first subscription request or a first obtaining request sent by the first communication device;
sending a third subscription request or a third obtaining request to the second communication device;
receiving the computing power information of the UE sent by the second communication device; and
sending the computing power information of the UE to the first communication device.

Optionally, the core network network element is the second communication device. The sending the computing power information of the first communication device to the core network network element includes:
receiving a first subscription request or a first obtaining request sent by the second communication device; and
sending the computing power information of the second communication device ti the first communication device.

Optionally, the core network network element is the second communication device. Before the third communication device performs the fourth operation, the method further includes:
sending a third subscription request or a third obtaining request to the second communication device.

The fourth operation includes at least one of the following:
receiving the computing power information of the second communication device sent by the second communication device; and
receiving the computing power information that is collected by the second communication device and that is sent by the second communication device.

It should be noted that this embodiment serves as an implementation of the third communication device corresponding to the embodiments shown in FIG. 2, FIG. 3, and FIG. 4. For the specific implementation of this embodiment, refer to related descriptions of the embodiments shown in FIG. 2, FIG. 3, and FIG. 4. To avoid repeated descriptions, details are not described in this embodiment again. In this embodiment, working performance of the communication system can be improved.

The method provided in this embodiment of this application is exemplified below by using specific embodiments.

### Embodiment 1:

The first communication device is a 5GC network element, and the UE may report computing power information through a NAS message.

As shown in FIG. 6, a method for obtaining computing power information may include the following steps:

Step 501: UE sends computing power information of UE to a first network element through a NAS message.

The NAS message may include at least one of the following:
PDUsession establishment request;
PDUsession modification request;
PDUsession establishment ACK;
PDUsession modification ACK;
Registration Request; and
Registration Complete.

The first network element may be a 5GC network element. The first network element may include at least one of the following:
an AMF, an SMF, an NWDAF, OAM, a CSCF, and the like.

Step 502: The first network element sends the computing power information of the UE to a second network element.

After obtaining the computing power information of the UE, the first network element may share the computing power information of the UE to another 5GC network element. The second network element may be a 5GC network element other than the first network element. The second network element may include at least one of the following: an AMF, an SMF, an NWDAF, OAM, a CSCF, and the like.

It should be noted that signaling that may be for transferring the computing power information of the UE includes:
Nsmf_PDUSession_CreateSMContext Request sent by an AMF to an SMF;
Nsmf_PDUSession_UpdateSMContext Request sent by the AMF to the SMF;
Namf_Communication_UEContextTransfer that is sent by the AMF to another AMF and that is for transferring a context of the UE;
Nudm_SDM_Get for the AMF to recover subscription data of the UE from UDM, where the subscription data of the UE includes the computing power information of the UE;
Nudm_SDM_Subscribe for the AMF to subscribe to the subscription data of the UE; and
Namf_Communication_N1N2MessageTransfer.

The computing power information of the UE is transferred through Namf_Communication_N1N2MessageTransfer. The computing power information is carried in a case that the UE establishes a PDU session (session). The computing power information of the UE may be sent to the AMF through context transfer.

The computing power information of the UE in the context of the UE is transferred through Namf_Communication_UEContextTransfer.

In this case, the 5GC network element has obtain the computing power information of the terminal, and subsequently may deliver, to the terminal based on the computing power information or a computing power status of the UE, a computing power task matching computing power of the UE.

Step 503: The first network element sends computing power information of the first network element to the UE.

The first network element may send the computing power information of the first network element to the UE through a NAS message.

The first network element may send the computing power information of the first network element to the UE through an ePCO process.

The first network element may send the computing power information of the first network element to the UE through at least one of the following:
PDUSession Establishment Accept;
PDUSession Modification Accept;
PDUSession Modification Command; and
Registration Accept.

In this case, the terminal obtains computing power status information of the 5GC network element, and subsequently, the terminal may migrate the computing power task in the terminal to a side of a 5G core network for processing. Alternatively, the terminal may divide the computing power task in the terminal and then, hand over a part of the computing power task to the 5G core network for processing.

### Embodiment 2:

The first communication device is a 5GC network element, the second communication device is an MNO AF, and the third communication device is an NWDAF or a CSCF.

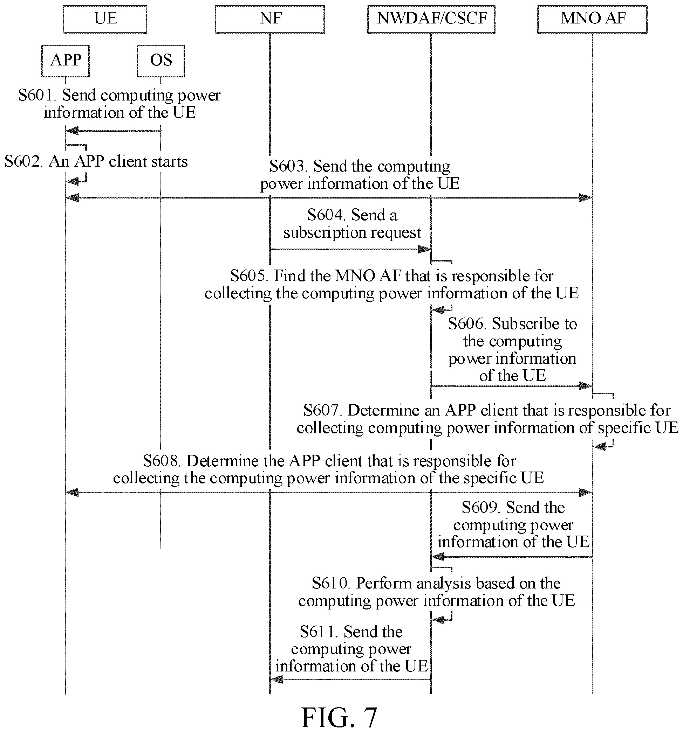

As shown in FIG. 7, using an example in which the first communication device is a network element NF, a method for obtaining computing power information may include the following steps:
Step 601: An OS or a module (module) chip of UE sends computing power information of the UE to an APP on the UE.

The computing power information of the UE may be sent to the APP through an internal interface, may be sent to all APPs in bulk, or may be sent to a preset APP.

Based on computing power of the terminal, the APP may properly assign a computing power task or divide the computing power task and assign a part of the computing power task to the terminal.

Step 602: An APP client starts.

Step 603: The APP client sends the computing power information of the UE to an MNO AF.

The APP client establishes a PDUSession connection with the MNO AF. The MNO AF is responsible for collecting the computing power information of the UE. The APP client may send the computing power information of the UE to the MNO AF, so that the 5G network can obtain the computing power information of the UE.

Step 604: The network element NF sends a subscription request to an NWDAF or a CSCF.

The subscription request is for subscribing to the computing power information of the UE or related analytics of the computing power of the UE. The subscription request may include a SUPI, a GPSI, or a group ID, and may be for subscribing to computing power information of UE or some UEs. Alternatively, the subscription request may be for subscribing to computing power information of all UEs (any UE).

For example, another core network network element, such as an SMF or an AMF, may include a parameter such as the SUPI or the GPSI, in subscription request signaling, to request the NWDAF or the CSCF for computing power information of specific UE.

In addition, the network element NF may send the subscription request to the NWDAF or the CSCF through Nnwdaf_AnalyticsSubscription_Subscribe signaling or Nnwdaf_AnalyticsInfo_Request signaling.

The subscription request may include parameters:

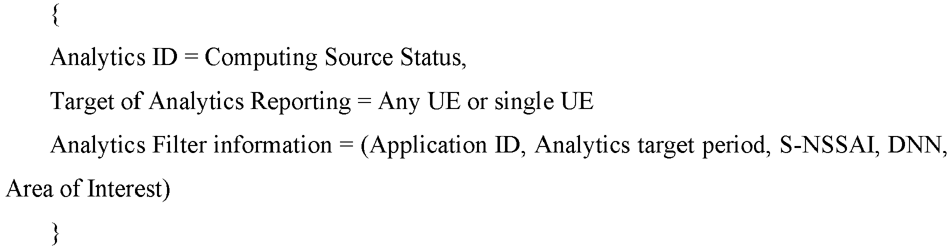

A value of the Analytics ID (Analytics ID) parameter is Computing Source Status (Computing Source Status). The ID indicates that it is the computing power information that is requested or subscribed to. A value of the Target of Analytics Reporting (Target of Analytics Reporting) parameter is Any UE or single UE (Any UE or single UE). Analytics Filter information (Analytics Filter information) includes an application (Application) ID, an analytics target period (Analytics target period), indicating obtaining of a statistical result in which period of time is expected, network slice selection assistance information (Single Network Slice Selection Assistance Information, S-NSSAI), a data network name (Data Network Name, DNN), and an area of Interest (Area of Interest).

Step 605: The NWDAF or the CSCF finds the MNO AF that is responsible for collecting the computing power information of the UE.

The NWDAF or the CSCF may find, by using a network element searching function of an NRF, the MNO AF network element that is responsible for collecting the computing power information of the UE.

Step 606: The NWDAF or the CSCF subscribes to the computing power information of the UE from the MNO AF.

Optionally, the NWDAF or CSCF may use Naf EventExposure Subscribe signaling to subscribe to computing power information related to UE in the MNO AF, and may subscribe to computing power information of single UE, a group of UEs, or any UE. Subscription may be performed through the following parameters: (i.e. SUPI, Internal Group Identifier or any UE).

It should be noted that the NWDAF or the CSCF may directly send a subscription request to the MNO AF to subscribe to the computing power information of the UE. Alternatively, the NWDAF or the CSCF may send the subscription request to a NEF. The NEF sends the subscription request to the MNO AF to subscribe to the computing power information of the UE. The NWDAF or the CSCF may send the subscription request through Nnef_EventExposure_Subscribe signaling, and the NEF may send the received subscription request to the MNO AF through Naf_EventExposure_Subscribe signaling. In a case that the AF is an MNO AF, the AF does not need to be authenticated by the NEF network element because the AF is a trusted AF and is located inside the 5GC core network. In a case that the AF is not an MNO AF, the AF requires the NEF network element to perform authentication on a subscription or obtaining request sent by the AF because the AF is not a trusted AF.

The subscription request may include parameters:

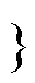

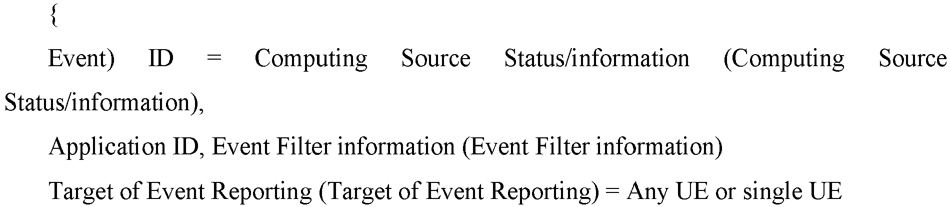

A value of the Event (Event) ID parameter is Computing Source Status/information (Computing Source Status/information). Further, the parameters, Application (Application) ID, Event Filter information (Event Filter information), and Target of Event Reporting (Target of Event Reporting) whose value is Any UE or single UE, are included.

Step 607: The MNO AF determines an APP client that is responsible for collecting computing power information of specific UE.

Step 608: The MNO AF establishes a connection with the UE.

The MNO AF may establish a connection with the UE based on a PDUSession connection that has been established with the APP client, so that the computing power information of the UE can be collected.

Step 609: The AF sends the computing power information of the UE to the NWDAF or the CSCF.

The AF may directly send the computing power information of the UE to the NWDAF or the CSCF. Alternatively, the AF may send the computing power information of the UE to the NWDAF or the CSCF through the NEF. The AF may send the computing power information of the UE to the NEF through Naf_Event_Exposure_Notify signaling, and then, the NEF may send the received computing power information of the UE to the NWDAF or the CSCF through Nnef_EventExposure_Notify signaling. The computing power information of the UE may be added to both the Naf_Event_Exposure_Notify signaling and the Nnef_EventExposure_Notify signaling.

Step 610: The NWDAF or the CSCF performs analysis based on the computing power information of the UE.

It should be noted that step 610 is an optional step. In a case that NWDAF or the CSCF further perform other analysis based on the current computing power information of the UE, an analysis operation is performed in this step.

Step 611: The NWDAF or the CSCF sends the computing power information of the UE to the network element NF.

The NWDAF or the CSCF may send the computing power information of the UE to the network element NF through Nnwdaf_AnalyticsSubscription_Notify signaling or Nnwdaf_AnalyticsInfo_Notify signaling.

In addition, in a case that NWDAF or the CSCF further perform other analysis based on the current computing power information of the UE, related analytics and the computing power information of the UE may be sent to the network element NF together.

In this embodiment, the computing power information can be obtained based on the MNO AF, and the MNO AF may collect the computing power information of the UE, and expose the computing power information of the UE to the 5GC network element. The 5GC network element, such as an SMF, an AMF, or an NWDAF, may deliver, based on the computing power information of the UE, a computing power task matching computing power of the UE. Embodiment 3:

The first communication device is a 5GC network element, and the second communication device is an AF. The AF may directly subscribe to computing power information of a network element. The network element may be various 5GC network elements such as an NF, an SMF, an AMF, or an NWDAF.

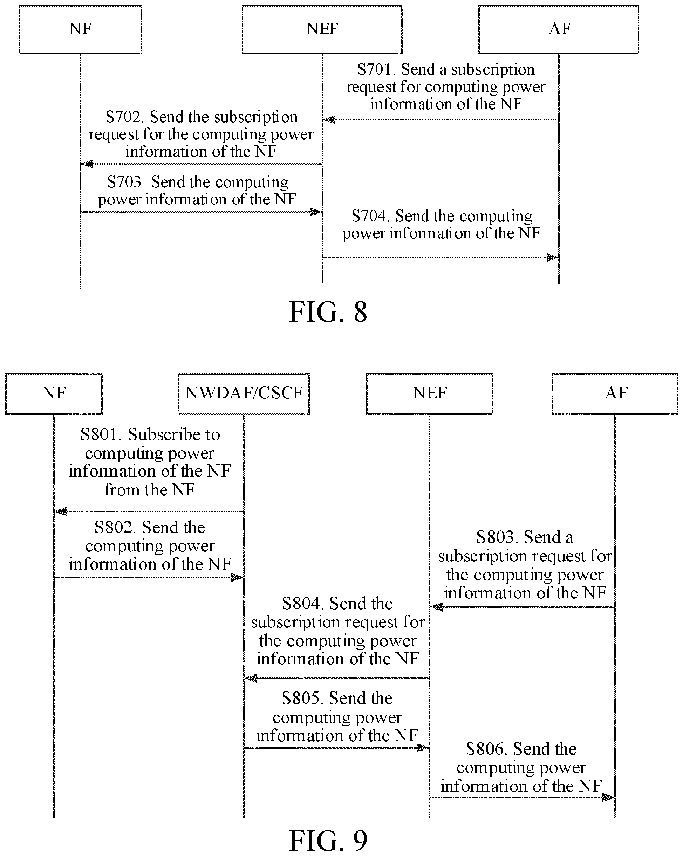

As shown in FIG. 8, using an example in which the network element is an NF, a method for obtaining computing power information may include the following steps:

Step 701: An AF sends a subscription request for computing power information of an NF to a NEF.

Optionally, the AF may initiate, to the NEF, subscription to the computing power information of the NF through Nnef_Event_Exposure_Subscribe signaling.

Step 702: The NEF sends the subscription request for the computing power information of the NF to the NF.

After authenticating the subscription request of the AF, the NEF may trigger subscription to the computing power information of the NF. Optionally, the NEF may initiate, to the NF, subscription to the computing power information of the NF through Nnf_EventExposure_Subscribe signaling. The Nnf_EventExposure_Subscribe signaling may be for requesting to subscribe to the computing power information of the NF. The NF herein is a network function. The NF represents various network element functions, for example, an AMF and an SMF, in a 5G network. Therefore, in a case that the NF is an AMF, the signaling is Namf_EventExposure_Subscribe or Namf_ EventExposure_Notify.

Step 703: The NF sends the computing power information of the NF to the NEF.

Optionally, the NF may send the computing power information of the NF to the NEF through Nnf_EventExposure_Notify signaling. The Nnf_EventExposure_Notify signaling may carry the computing power information of the NF.

Step 704: The NEF sends the computing power information of the NF to the AF.

Optionally, the NEF sends the computing power information of the NF to the AF through Nnef_Event_Exposure_Notify signaling. The Nnef_Event_Exposure_Notify signaling may carry the computing power information of the NF.

It should be noted that the NF may directly send the computing power information of the NF to the AF without sending the computing power information through the NEF. Optionally, the NF may send the computing power information of the NF to the AF through Nnf_EventExposure_Notify signaling. The Nnf_EventExposure_Notify signaling may carry the computing power information of the NF.

In this embodiment, a third-party application may obtain computing power information of a 5GC network element through the AF, and subsequently, the third-party application may assign, based on the computing power information of the network element, a computing power task to the 5G core network network element for processing.

### Embodiment 4:

The first communication device is a 5GC network element, the second communication device is an AF, and third communication device is an NWDAF or a CSCF. The NWDAF or the CSCF may obtain computing power information of a network element, and the AF subscribes, at the NWDAF or the CSCF, to the computing power information of the network element. The network element may be various 5GC network elements such as an NF, an SMF, an AMF, or an NWDAF.

As shown in FIG. 9, using an example in which the network element is an NF, a method for obtaining computing power information may include the following steps:
Step 801: An NWDAF or a CSCF subscribes to computing power information of an NF from the NF.

Optionally, The NWDAF or the CSCF may subscribe to the computing power information of the NF from the NF through Nnf_EventExposure_Subscribe signaling.

Step 802: The NF sends the computing power information of the NF to the NWDAF or the CSCF.

The NF may send the computing power information of its own network element to the NWDAF or the CSCF in a notifying manner. Optionally, the NF may send the computing power information of the NF to the NWDAF or the CSCF through Nnf_EventExposure_Subscribe signaling. The Nnf_EventExposure_Subscribe signaling may carry the computing power information of the NF.

Step 803: An AF sends a subscription request for the computing power information of the NF to a NEF.

Optionally, the AF may initiate, to the NEF, subscription to the computing power information of the NF through Nnef_Event_Exposure_Subscribe signaling.

Step 804: The NEF sends the subscription request for computing power information of the NF to the NWDAF or the CSCF.

After authenticating the subscription request of the AF, the NEF may trigger subscription to the computing power information collected by the NWDAF or the CSCF.

Optionally, the NEF may send the subscription request for the computing power information of the NF to the NWDAF or the CSCF through subscription signaling: Nnwdaf_AnalyticsSubscription_Subscrib signaling or Nnwdaf_AnalyticsInfo_Request signaling. The subscription signaling may include a request for subscription to the computing power information of the NF.

Parameters included in the subscription request may be:

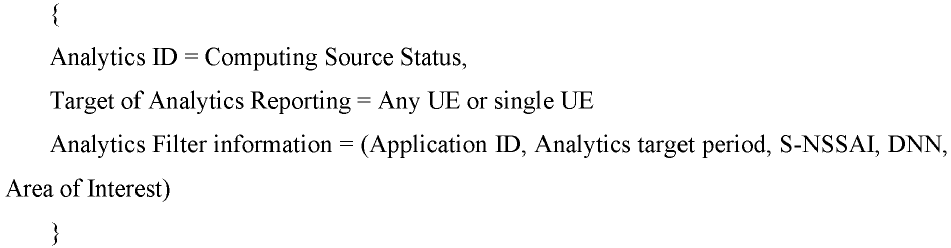

Step 805: The NWDAF or the CSCF sends the computing power information of the NF to the NEF.

Optionally, the NWDAF or the CSCF may send the computing power information of the NF to the NEF through Nnwdaf_ AnalyticsSubscription_Notify signaling or Nnwdaf_AnalyticsInfo_Notify signaling. The Nnf_ EventExposure_Notify signaling may carry the computing power information of the NF.

### Step 806: The NEF sends the computing power information of the NF to the AF.

Optionally, the NEF may send computing power status information of the network element to the AF through Nnef_EventExposure _Notify signaling. The computing power information of the NF may be carried in the Nnef_EventExposure _Notify signaling.

It should be noted that the NWDAF or the CSCF may directly send the computing power information of the NF to the AF without sending the computing power information through the NEF.

In this embodiment, the 5GC network element may subscribe to computing power information of another NF network element, and expose the computing power information to a third-party AF application. Inside the 5GC, a network element such as OAM, an NWDAF, or a CSCF collects computing power information of various network elements and exposes the computing power information to the AF through the NEF in an event exposure (event exposure) manner. In this way, the AF may properly divide the computing power task based on the computing power information.

### Embodiment 5:

The first communication device is a 5GC network element, and the third communication device is an NWDAF or a CSCF. The UE may subscribe to computing power information of a network element. The network element may be various 5GC network elements such as an NF, an SMF, an AMF, or an NWDAF.

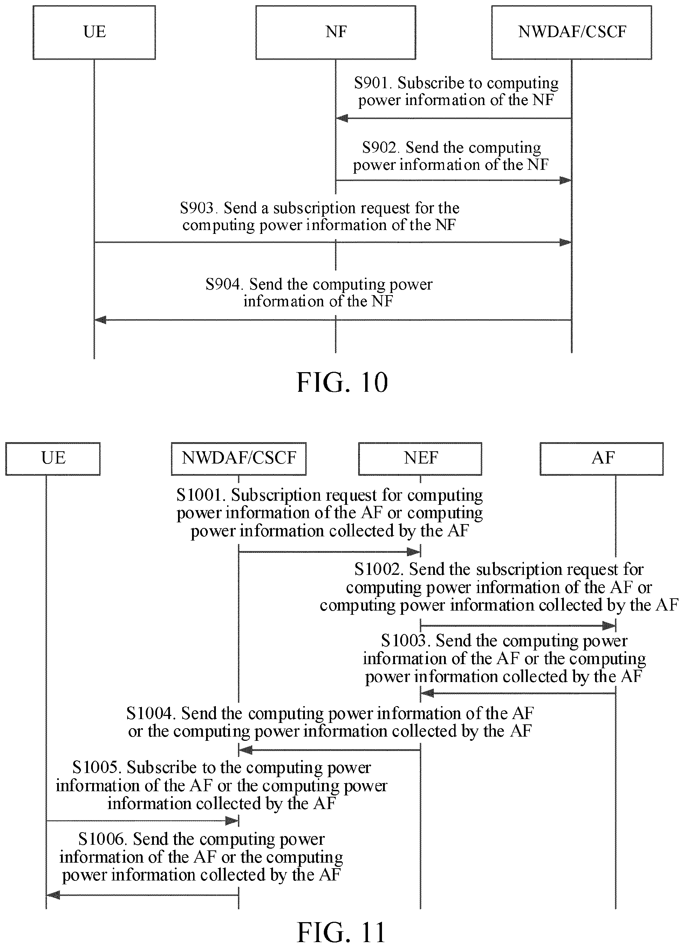

As shown in FIG. 10, using an example in which the network element is an NF, a method for obtaining computing power information may include the following steps:
Step 901: An NWDAF or a CSCF subscribes to computing power information of an NF from the NF.

For a specific implementation, refer to step 801, and details are not described herein again.

Step 902: The NF sends the computing power information of the NF to the NWDAF or the CSCF.

For a specific implementation, refer to step 802, and details are not described herein again.

Step 903: The UE sends a subscription request for computing power information of the NF to the NWDAF or the CSCF.

The subscription request may include a network element ID, an IP address, or the like of the NF.

Step 904: The NWDAF or the CSCF sends the computing power information of the NF to the UE.

In this implementation, computing power information of other 5GC network elements may be collected through a centralized network element such as the NWDAF or the CSCF. In addition, the computing power information of the network elements may also be exposed to the UE. The UE may divide its own computing power task and migrate some computing power tasks to the 5GC network elements for processing.

### Embodiment 6:

The second communication device is an AF, and the third communication device is an NWDAF or a CSCF. The UE may subscribe to computing power information of a third-party AF or computing power information collected by the AF.

As shown in FIG. 11, a method for obtaining computing power information may include the following steps:

Step 1001: An NWDAF or a CSCF send, to a NEF, a subscription request for computing power information of an AF or computing power information collected by the AF.

Optionally, the NWDAF or the CSCF may send, to the NEF through Nnef_EventExposure_Subscribe signaling, the subscription request for the computing power information of the AF or the computing power information collected by the AF.

Step 1002: The NEF sends, to the AF, the subscription request for the computing power information of the AF or the computing power information collected by the AF.

Optionally, the NEF may send, to the AF through Naf_EventExposure_Subscribe signaling, the subscription request for the computing power information of the AF or the computing power information collected by the AF. The Naf_EventExposure_Subscribe signaling may be for requesting to subscribe to the computing power information of the AF or the computing power information collected by the AF.

It should be noted that the NWDAF or CSCF may not send the subscription request to the AF through the NEF, and instead, the NWDAF or the CSCF may directly send, to the AF, the subscription request for the computing power information of the AF or the computing power information collected by the AF. The NWDAF or the CSCF may directly send, to the AF through Naf_EventExposure_Subscribe signaling, the subscription request for the computing power information of the AF or the computing power information collected by the AF.

Step 1003: The AF sends, to the NEF, the computing power information of the AF or the computing power information collected by the AF.

The AF may send, to the NEF through Naf_Event_Exposure_Notify signaling, the computing power information of the AF or the computing power information collected by the AF.

Step 1004: The NEF sends, to the NWDAF or the CSCF, the computing power information of the AF or the computing power information collected by the AF.

Optionally, The NEF sends, to the NWDAF or the CSCF through the Nnef_Event_Exposure_Notify signaling, the computing power information of the AF or the computing power information collected by the AF. The Nnef_Event_Exposure_Notify signaling may carry the computing power information of the AF or the computing power information collected by the AF.

It should be noted that the NEF may send, to the NWDAF or the CSCF, the computing power information of the AF or the computing power information collected by the AF without sending the computing power information through the NEF. The AF may directly send, to the NWDAF or the CSCF through the Naf_Event_Exposure_Notify signaling, the computing power information of the AF or the computing power information collected by the AF. The Naf_Event_Exposure _Notify signaling may carry the computing power information of the AF or the computing power information collected by the AF.

Step 1005: The UE subscribes, from the NWDAF or the CSCF, to the computing power information of the AF or the computing power information collected by the AF.

The UE may send a subscription request to the NWDAF or the CSCF, to subscribe to the computing power information of the AF or the computing power information collected by the AF. The subscription request may include information such as an ID of the AF or an IP address of the AF.

Step 1006: The NWDAF or the CSCF sends, to UE, the computing power information of the AF or the computing power information collected by the AF.

In this embodiment, computing power status information of a third-party application server can be obtained. Such a method is mainly applied to some computing power tasks, and may need to be completed through collaboration of the third-party application server, the 5GC network element, and the terminal. Therefore, computing power information of the third-party application server collected by the AF needs to be learned of.

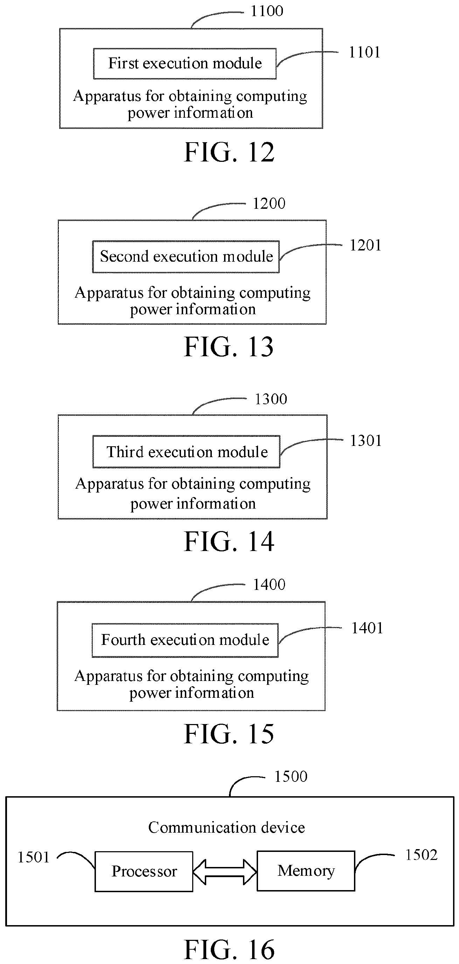

FIG. 12 is a structural diagram 1 of an apparatus for obtaining computing power information according to an embodiment of this application. UE includes the apparatus for obtaining computing power information. As shown in FIG. 12, an apparatus 1100 for obtaining computing power information includes:
a first execution module 1101, configured to perform a first operation. The first operation includes at least one of the following:
performing, by a user equipment UE, a first operation, where the first operation includes at least one of the following:
sending computing power information of the UE to a core network network element;
receiving computing power information of a first communication device sent by the core network network element;
receiving computing power information of a second communication device sent by the core network network element; and
receiving computing power information that is collected by the second communication device and that is sent by the core network network element.

The computing power information indicates at least one of the following: used computing power, remaining computing power, available computing power, total computing power, a computing power type, and estimated duration of occupying computing power by a computing power task.

Optionally, the first execution module 1101 is specifically further configured to:
receive a computing power task that is sent by the core network network element and that matches the computing power information of the UE;
   or
send, to the core network network element, a computing power task matching the computing power information received by the UE.

Optionally, the first execution module 1101 is specifically configured to:
send the computing power information of the UE to the core network network element through non-access stratum NAS signaling.

Optionally, the NAS signaling includes at least one of the following:
a protocol data unit PDU session establishment request;
a PDU session modification request;
a PDU session establishment response;
a PDU session modification response;
a registration request; and
registration completion.

Optionally, the first execution module 1101 is specifically configured for at least one of the following:
sending the computing power information of the UE to the first communication device, where the core network network element is the first communication device;
sending the computing power information of the UE to the second communication device, where the core network network element is the second communication device; and
sending the computing power information of the UE to the third communication device, where the core network network element is the third communication device.

Optionally, the first execution module 1101 is specifically configured to:
receive, through at least one of the following, the computing power information of the first communication device sent by the core network network element:
an extended protocol configuration option ePCO;
PDU session establishment acceptance;
PDU session modification acceptance;
a PDU session modification command; and
registration acceptance.

Optionally, the core network network element is the third communication device. The first execution module 1101 is specifically further configured to:
send a first subscription request or a first obtaining request to the third communication device.

The first operation includes at least one of the following:
receiving the computing power information of the first communication device sent by the third communication device;
receiving the computing power information of the second communication device sent by the third communication device; and
receiving computing power information that is collected by the second communication device and that is sent by the third communication device.

Optionally, the first execution module 1101 is specifically further configured to:
send the computing power information of the UE through an operating system OS or a module chip to an application installed on the UE.

Optionally, the first execution module 1101 is specifically further configured to:
receive a request for obtaining the computing power information of the UE sent by the application.

The apparatus 1100 for obtaining computing power information in this embodiment of this application can improve working performance of the communication system.

The apparatus 1100 for obtaining computing power information in this embodiment of this application may be an apparatus or an apparatus or electronic device having an operating system, or may be a component, an integrated circuit, or a chip in a terminal. The apparatus or electronic device may be a mobile terminal or may be a non-mobile terminal. For example, the mobile terminal may include, but not limited to, types of the terminal 11 listed above, and the non-mobile terminal may be a server, a network attached storage (Network Attached Storage, NAS), a personal computer (personal computer, PC), a television (television, TV), a teller machine, or an automated machine, which are not specifically limited in this embodiment of this application.

The apparatus 1100 for obtaining computing power information in this embodiment of this application may implement processes implemented in the method embodiment shown in FIG. 2, and achieve the same beneficial effects. To avoid repetition, details are not described herein again.

FIG. 13 is a structural diagram 2 of an apparatus for obtaining computing power information according to an embodiment of this application. A first communication device includes the apparatus for obtaining computing power information. As shown in FIG. 13, an apparatus 1200 for obtaining computing power information includes:
a second execution module 1201, configured to perform a second operation. The second operation includes at least one of the following:
performing, by a first communication device, a second operation, where the second operation includes at least one of the following:
sending computing power information of the first communication device to a core network network element;
sending the computing power information of the first communication device to UE;
receiving computing power information of the UE sent by the core network network element; and
receiving the computing power information of the UE sent by the UE.

The computing power information indicates at least one of the following: used computing power, remaining computing power, available computing power, total computing power, a computing power type, and estimated duration of occupying computing power by a computing power task.

Optionally, the second execution module 1201 is specifically further configured to:
receive a computing power task that is sent by the core network network element or the UE and that matches the computing power information of the first communication device;
   or
send, to the core network network element or the UE, a computing power task matching the computing power information received by the first communication device.

Optionally, the second execution module 1201 is specifically further configured to:
send the computing power information of the UE to the core network network element.

Optionally, the second operation includes: sending computing power information of the first communication device to a core network network element.

The second execution module 1201 is specifically further configured to:
receive a second subscription request or a second obtaining request sent by the core network network element.

The core network network element includes at least one of the following:
a second communication device, a third communication device, and a fourth communication device.

Optionally, the second execution module 1201 is specifically configured to:
send a first subscription request or a first obtaining request to the third communication device; and
receive the computing power information of the UE sent by the third communication device, where the core network network element is the third communication device.

The apparatus 1200 for obtaining computing power information in this embodiment of this application can improve working performance of the communication system.

The apparatus 1200 for obtaining computing power information in this embodiment of this application may be an apparatus or an apparatus or electronic device having an operating system, or may be a component, an integrated circuit, or a chip in a terminal. The apparatus or electronic device may be a mobile terminal or may be a non-mobile terminal. For example, the mobile terminal may include, but not limited to, types of the terminal 11 listed above, and the non-mobile terminal may be a server, a network attached storage (Network Attached Storage, NAS), a personal computer (personal computer, PC), a television (television, TV), a teller machine, or an automated machine, which are not specifically limited in this embodiment of this application.

The apparatus 1200 for obtaining computing power information in this embodiment of this application may implement processes implemented in the method embodiment shown in FIG. 3, and achieve the same beneficial effects. To avoid repetition, details are not described herein again.

FIG. 14 is a structural diagram 3 of an apparatus for obtaining computing power information according to an embodiment of this application. A second communication device includes the apparatus for obtaining computing power information. As shown in FIG. 14, an apparatus 1300 for obtaining computing power information includes:
a third execution module 1301, configured to perform a third operation. The third operation includes at least one of the following:
receiving computing power information of UE sent by the UE;
receiving the computing power information of the UE sent by a core network network element;
sending the computing power information of the UE to the core network network element;
receiving computing power information of a first communication device sent by the core network network element;
sending computing the power information of the first communication device to the core network network element;
sending the computing power information of the first communication device to the UE;
sending computing power information of the second communication device to the core network network element;
sending the computing power information of the second communication device to the UE;
sending, to the core network network element, computing power information collected by the second communication device; and
sending, to the UE, the computing power information collected by the second communication device.

The computing power information indicates at least one of the following: used computing power, remaining computing power, available computing power, total computing power, a computing power type, and estimated duration of occupying computing power by a computing power task.

Optionally, third execution module 1301 is specifically further configured to:
receive a computing power task that is sent by the core network network element or the UE and that matches the computing power information of the second communication device;
   or
send, to the core network network element or the UE, a computing power task matching the computing power information received by the second communication device.

Optionally, the core network network element is the third communication device. The third execution module 1301 is specifically further configured to:
receive a third subscription request or a third obtaining request sent by the third communication device.

The third operation includes at least one of the following:
sending the computing power information of the UE to the third communication device;
sending the computing power information of the second communication device to the third communication device; and
sending, to the third communication device, the computing power information collected by the second communication device.

Optionally, the core network network element is the first communication device. The third execution module 1301 is specifically configured to:
send a second subscription request or a second obtaining request to the first communication device; and
receive the computing power information of the first communication device sent by the first communication device.

Optionally, the core network network element is the third communication device. The third execution module 1301 is specifically configured to:
send a first subscription request or a first obtaining request to the third communication device; and
receive the computing power information of the first communication device sent by the third communication device.

The apparatus 1300 for obtaining computing power information in this embodiment of this application can improve working performance of the communication system.

The apparatus 1300 for obtaining computing power information in this embodiment of this application may be an apparatus or an apparatus or electronic device having an operating system, or may be a component, an integrated circuit, or a chip in a terminal. The apparatus or electronic device may be a mobile terminal or may be a non-mobile terminal. For example, the mobile terminal may include, but not limited to, types of the terminal 11 listed above, and the non-mobile terminal may be a server, a network attached storage (Network Attached Storage, NAS), a personal computer (personal computer, PC), a television (television, TV), a teller machine, or an automated machine, which are not specifically limited in this embodiment of this application.

The apparatus 1300 for obtaining computing power information in this embodiment of this application may implement processes implemented in the method embodiment shown in FIG. 4, and achieve the same beneficial effects. To avoid repetition, details are not described herein again.

FIG. 15 is a structural diagram 4 of an apparatus for obtaining computing power information according to an embodiment of this application. A third communication device includes the apparatus for obtaining computing power information. As shown in FIG. 15, an apparatus 1400 for obtaining computing power information includes:
a fourth execution module 1401, configured to perform a fourth operation. The fourth operation includes at least one of the following:
receiving computing power information of UE sent by the UE;
receiving the computing power information of the UE sent by a core network network element;
sending the computing power information of the UE to the core network network element;
receiving computing power information of a first communication device sent by the core network network element;
sending the computing power information of the first communication device to the core network network element;
sending the computing power information of the first communication device to the UE;
sending computing power information of a second communication device to the core network network element;
sending the computing power information of the second communication device to the UE;
sending, to the core network network element, computing power information collected by the second communication device;
sending, to the UE, the computing power information collected by the second communication device;
receiving the computing power information of the second communication device sent by the second communication device; and
receiving the computing power information that is collected by the second communication device and that is sent by the second communication device.

The computing power information indicates at least one of the following: used computing power, remaining computing power, available computing power, total computing power, a computing power type, and estimated duration of occupying computing power by a computing power task.

Optionally, the fourth execution module 1401 is specifically further configured to:
receive a computing power task that is sent by the core network network element or the UE and that matches computing power information of the third communication device;
   or
send, to the core network network element, the UE, or the second communication device, a computing power task matching the computing power information received by the third communication device.

Optionally, the fourth execution module 1401 is specifically further configured to:
receive a first subscription request or a first obtaining request sent by the UE.

The fourth operation includes at least one of the following:
sending the computing power information of the first communication device to the UE;
sending the computing power information of the second communication device to the UE; and
sending the computing power information collected by the second communication device to the UE.

Optionally, the core network network element is the first communication device. The fourth execution module 1401 is specifically configured to:
send a second subscription request or a second obtaining request to the first communication device; and
receive the computing power information of the first communication device sent by the first communication device.

Optionally, the core network network element is the first communication device. The fourth execution module 1401 is specifically configured to:
receive a first subscription request or a first obtaining request sent by the first communication device;
send a third subscription request or a third obtaining request to the second communication device;
receive the computing power information of the UE sent by the second communication device; and
send the computing power information of the UE to the first communication device.

Optionally, the core network network element is the second communication device. The fourth execution module 1401 is specifically configured to:
receive a first subscription request or a first obtaining request sent by the second communication device; and
send the computing power information of the second communication device ti the first communication device.

Optionally, the core network network element is the second communication device. The fourth execution module 1401 is specifically configured to:
send a third subscription request or a third obtaining request to the second communication device.

The fourth operation includes at least one of the following:
receiving the computing power information of the second communication device sent by the second communication device; and
receiving the computing power information that is collected by the second communication device and that is sent by the second communication device

The apparatus 1400 for obtaining computing power information in this embodiment of this application can improve working performance of the communication system.

The apparatus 1400 for obtaining computing power information in this embodiment of this application may be an apparatus or an apparatus or electronic device having an operating system, or may be a component, an integrated circuit, or a chip in a terminal. The apparatus or electronic device may be a mobile terminal or may be a non-mobile terminal. For example, the mobile terminal may include, but not limited to, types of the terminal 11 listed above, and the non-mobile terminal may be a server, a network attached storage (Network Attached Storage, NAS), a personal computer (personal computer, PC), a television (television, TV), a teller machine, or an automated machine, which are not specifically limited in this embodiment of this application.

The apparatus 1400 for obtaining computing power information in this embodiment of this application may implement processes implemented in the method embodiment shown in FIG. 5, and achieve the same beneficial effects. To avoid repetition, details are not described herein again.

Optionally, as shown in FIG. 16, an embodiment of this application further provides a communication device 1500, including a processor 1501, a memory 1502, and a program or instructions stored in the memory 1502 and executable on the processor 1501. For example, in a case that the communication device 1500 is a terminal, the program or the instructions, when executed by the processor 1501, implement the processes of the foregoing embodiment of the method for obtaining computing power information on a side of the UE and can achieve the same technical effects. In a case that the communication device 1500 is a first communication device, the program or instructions, when executed by the processor 1501, implement the processes of the foregoing embodiment of the method for obtaining computing power information on a side of the first communication device and can achieve the same technical effects. To avoid repetition, details are not described herein again. In a case that the communication device 1500 is a second communication device, the program or instructions, when executed by the processor 1501, implement the processes of the foregoing embodiment of the method for obtaining computing power information on a side of the second communication device and can achieve the same technical effects. To avoid repetition, details are not described herein again. In a case that the communication device 1500 is a third communication device, the program or instructions, when executed by the processor 1501, implement the processes of the foregoing embodiment of the method for obtaining computing power information on a side of the third communication device and can achieve the same technical effects. To avoid repetition, details are not described herein again.

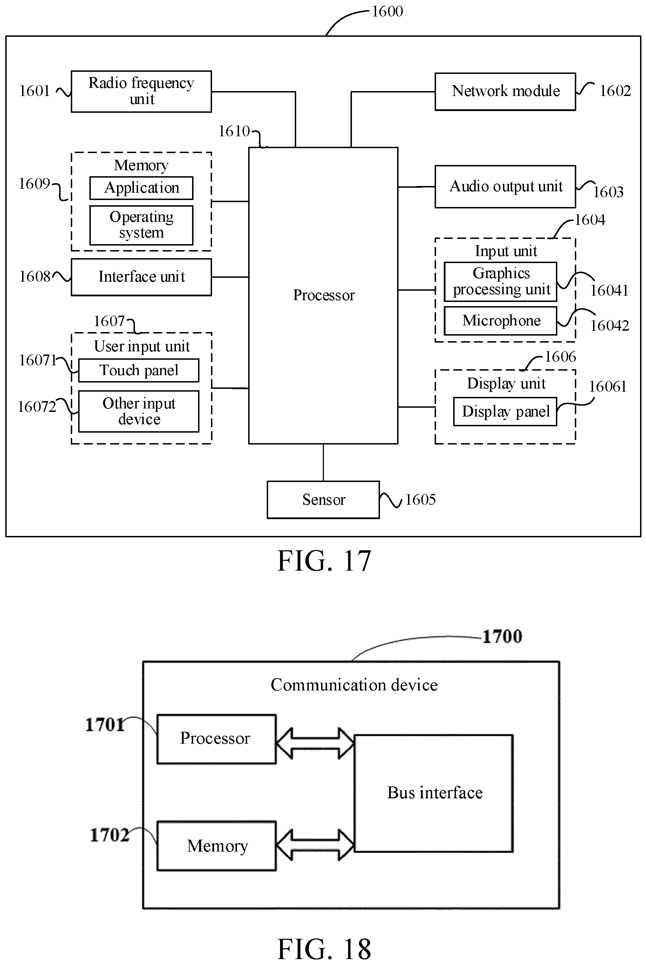

Embodiments of this application further provide UE, including a processor and a communication interface. The processor or the communication interface is configured to perform a first operation. The first operation includes at least one of the following: sending computing power information of the UE to a core network network element; receiving computing power information of a first communication device sent by the core network network element; receiving computing power information of a second communication device sent by the core network network element; and receiving computing power information that is collected by the second communication device and that is sent by the core network network element. The computing power information indicates at least one of the following: used computing power, remaining computing power, available computing power, total computing power, a computing power type, and estimated duration of occupying computing power by a computing power task. The embodiment of the UE corresponds to the method embodiment on the side of the UE. All implementation processes and implementations of the foregoing method embodiment are applicable to the embodiment of the UE and can achieve same technical effects. Specifically, FIG. 17 is a schematic diagram of a hardware structure of UE implementing an embodiment of this application.

UE 1600 includes, but is not limited to, at least some components in a radio frequency unit 1601, a network module 1602, an audio output unit 1603, an input unit 1604, a sensor 1605, a display unit 1606, a user input unit 1607, an interface unit 1608, a memory 1609, a processor 1610, and the like.

A person skilled in the art may understand that the UE 1600 may further include a power supply (such as a battery) for supplying power to the components. The power supply may be logically connected to the processor 1610 by a power supply management system, thereby implementing functions, such as charging, discharging, and power consumption management, by using the power supply management system. A UE structure shown in FIG. 16 does not constitute a limitation to the UE, and the UE may include more or fewer components than those shown in the figure, or some components may be combined, or a different component deployment may be used. Details are not described herein again.

It should be understood that, in embodiments of this application, the input unit 1604 may include a graphics processing unit (Graphics Processing Unit, GPU) 16041 and a microphone 16042. The graphics processing unit 16041 processes image data of a static picture or a video obtained by an image capturing apparatus (for example, a camera) in a video capturing mode or an image capturing mode. The display unit 1606 may include a display panel 16061, and the display panel 16061 may be configured in a form such as a liquid crystal display or an organic light-emitting diode. The user input unit 1607 includes a touch panel 16071 and another input device 16072. The touch panel 16071 is also referred to as a touchscreen. The touch panel 16071 may include two parts: a touch monitoring apparatus and a touch controller. The another input device 16072 may include, but not limited to, a physical keyboard, a functional key (such as a volume control key or a switch key), a track ball, a mouse, and a joystick, which is not described herein in detail.

In this embodiment of this application, after being received by the radio frequency unit 1601, downlink data from the network-side device is processed by the processor 1610. In addition, uplink data is sent to the network-side device. Generally, the radio frequency unit 1601 includes, but is not limited to, an antenna, at least one amplifier, a transceiver, a coupler, a low noise amplifier, a duplexer, and the like.

The memory 1609 may be configured to store a software program or instructions and various data. The memory 1609 may mainly include a program or instruction storage region and a data storage region. The program or instruction storage region may store an operating system, an application or instruction required by at least one function (for example, a sound playback function or instructions or an image playback function), and the like. In addition, the memory 1609 may include a high-speed random access memory, or may include a non-volatile memory, where the non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory, for example, at least one magnetic disk storage device, a flash memory device, or other volatile solid-state storage devices.

The processor 1610 may include one or more processing units. Optionally, the processor 1610 may integrate an application processor and a modem. The application processor mainly processes an operating system, a user interface, an application or instructions, and the like. The modem processor mainly processes wireless communication, for example, a baseband processor. It may be understood that the modulation and demodulation processor may not be integrated into the processor 1610.

The radio frequency unit 1601 is configured to perform a first operation. The first operation includes at least one of the following:
sending computing power information of the UE to a core network network element;
receiving computing power information of a first communication device sent by the core network network element;
receiving computing power information of a second communication device sent by the core network network element; and
receiving computing power information that is collected by the second communication device and that is sent by the core network network element.

The computing power information indicates at least one of the following: used computing power, remaining computing power, available computing power, total computing power, a computing power type, and estimated duration of occupying computing power by a computing power task.

Optionally, the radio frequency unit 1601 is specifically further configured to:
receive a computing power task that is sent by the core network network element and that matches the computing power information of the UE;
   or
send, to the core network network element, a computing power task matching the computing power information received by the UE.

Optionally, the sending the computing power information of the UE to the core network network element includes:
sending the computing power information of the UE to the core network network element through non-access stratum NAS signaling.

Optionally, the NAS signaling includes at least one of the following:
a protocol data unit PDU session establishment request;
a PDU session modification request;
a PDU session establishment response;
a PDU session modification response;
a registration request; and
registration completion.

Optionally, the radio frequency unit 1601 is specifically configured for at least one of the following:
sending the computing power information of the UE to the first communication device, where the core network network element is the first communication device;
sending the computing power information of the UE to the second communication device, where the core network network element is the second communication device; and
sending the computing power information of the UE to the third communication device, where the core network network element is the third communication device.

Optionally, the radio frequency unit 1601 is specifically configured to:
receive, through at least one of the following, the computing power information of the first communication device sent by the core network network element:
an extended protocol configuration option ePCO;
PDU session establishment acceptance;
PDU session modification acceptance;
a PDU session modification command; and
registration acceptance.

Optionally, the radio frequency unit 1601 is specifically further configured to:
send a first subscription request or a first obtaining request to the third communication device.

The first operation includes at least one of the following:
receiving the computing power information of the first communication device sent by the third communication device;
receiving the computing power information of the second communication device sent by the third communication device; and
receiving computing power information that is collected by the second communication device and that is sent by the third communication device.

Optionally, the radio frequency unit 1601 is specifically configured to:
send the computing power information of the UE through an operating system OS or a module chip to an application installed on the UE.

Optionally, the radio frequency unit 1601 is specifically further configured to:
receive a request for obtaining the computing power information of the UE sent by the application.

The UE in this embodiment of this application can improve working performance of the communication system.

Specifically, the UE in this embodiment of this application further includes: instructions or program stored in the memory 1609 and executable on the processor 1610. The processor 1610 calls the instructions or program in the memory 1609 to execute the method performed by the modules shown in FIG. 12 and produce the same technical effects. To avoid repetition, details are not described herein again.

Embodiments of this application further provide a first communication device, including a processor and a communication interface. The communication interface is configured to perform a second operation. The second operation includes at least one of the following: sending computing power information of the first communication device to a core network network element; sending the computing power information of the first communication device to UE; receiving computing power information of the UE sent by the core network network element; and receiving the computing power information of the UE sent by the UE. The computing power information indicates at least one of the following: used computing power, remaining computing power, available computing power, total computing power, a computing power type, and estimated duration of occupying computing power by a computing power task. The embodiment of the first communication device corresponds to the method embodiment on the side of the first communication device. All implementation processes and implementations of the foregoing method embodiment are applicable to the embodiment of the first communication device and can achieve same technical effects.

Embodiments of this application further provide a second communication device, including a processor and a communication interface. The communication interface is configured to perform a third operation. The third operation includes at least one of the following: receiving computing power information of UE sent by the UE; receiving the computing power information of the UE sent by a core network network element; sending the computing power information of the UE to the core network network element; receiving computing power information of a first communication device sent by the core network network element; sending computing the power information of the first communication device to the core network network element; sending the computing power information of the first communication device to the UE; sending computing power information of the second communication device to the core network network element; sending the computing power information of the second communication device to the UE; sending, to the core network network element, computing power information collected by the second communication device; and sending, to the UE, the computing power information collected by the second communication device. The computing power information indicates at least one of the following: used computing power, remaining computing power, available computing power, total computing power, a computing power type, and estimated duration of occupying computing power by a computing power task. The embodiment of the second communication device corresponds to the method embodiment on the side of the second communication device. All implementation processes and implementations of the foregoing method embodiment are applicable to the embodiment of the second communication device and can achieve same technical effects.

Embodiments of this application further provide a third communication device, including a processor and a communication interface. The communication interface is configured to perform a fourth operation. The fourth operation includes at least one of the following: receiving computing power information of UE sent by the UE; receiving the computing power information of the UE sent by the core network network element; sending the computing power information of the UE to the core network network element; receiving computing power information of a first communication device sent by the core network network element; sending the computing power information of the first communication device to the core network network element; sending the computing power information of the first communication device to the UE; sending computing power information of a second communication device to the core network network element; sending the computing power information of the second communication device to the UE; sending, to the core network network element, computing power information collected by the second communication device; sending, to the UE, the computing power information collected by the second communication device; receiving the computing power information of the second communication device sent by the second communication device; and receiving the computing power information that is collected by the second communication device and that is sent by the second communication device. The computing power information indicates at least one of the following: used computing power, remaining computing power, available computing power, total computing power, a computing power type, and estimated duration of occupying computing power by a computing power task. The embodiment of the third communication device corresponds to the method embodiment on the side of the third communication device. All implementation processes and implementations of the foregoing method embodiment are applicable to the embodiment of the third communication device and can achieve same technical effects.

Embodiments of this application further provide a communication device. As shown in FIG. 18, the communication device 1700 includes: a memory 1702, a processor 1701, and a program stored in the memory 1702 and executable on the processor 1701. In FIG. 18, a bus interface is configured to provide an interface.

### In a case that the communication device is a first communication device:

The processor 1701 is configured to perform a second operation. The second operation includes at least one of the following:
sending computing power information of the first communication device to a core network network element;
sending the computing power information of the first communication device to UE;
receiving computing power information of the UE sent by the core network network element; and
receiving the computing power information of the UE sent by the UE.

The computing power information indicates at least one of the following: used computing power, remaining computing power, available computing power, total computing power, a computing power type, and estimated duration of occupying computing power by a computing power task.

Optionally, the processor 1701 is specifically further configured to:
receive a computing power task that is sent by the core network network element or the UE and that matches the computing power information of the first communication device;
   or
send, to the core network network element or the UE, a computing power task matching the computing power information received by the first communication device.

Optionally, the processor 1701 is specifically configured to:
send the computing power information of the UE to the core network network element.

Optionally, the second operation includes: sending computing power information of the first communication device to a core network network element.

The processor 1701 is specifically further configured to:
receive a second subscription request or a second obtaining request sent by the core network network element.

The core network network element includes at least one of the following:
a second communication device, a third communication device, and a fourth communication device.

Optionally, the processor 1701 is specifically configured to:
send a first subscription request or a first obtaining request to the third communication device; and
receive the computing power information of the UE sent by the third communication device, where the core network network element is the third communication device.

In a case that the communication device is a second communication device:
The processor 1701 is configured to perform a third operation. The third operation includes at least one of the following:
receiving computing power information of UE sent by the UE;
receiving the computing power information of the UE sent by a core network network element;
sending the computing power information of the UE to the core network network element;
receiving computing power information of a first communication device sent by the core network network element;
sending computing the power information of the first communication device to the core network network element;
sending the computing power information of the first communication device to the UE;
sending computing power information of the second communication device to the core network network element;
sending the computing power information of the second communication device to the UE;
sending, to the core network network element, computing power information collected by the second communication device; and
sending, to the UE, the computing power information collected by the second communication device.

The computing power information indicates at least one of the following: used computing power, remaining computing power, available computing power, total computing power, a computing power type, and estimated duration of occupying computing power by a computing power task.

Optionally, the processor 1701 is specifically further configured to:
receive a computing power task that is sent by the core network network element or the UE and that matches the computing power information of the second communication device;
   or
send, to the core network network element or the UE, a computing power task matching the computing power information received by the second communication device.

Optionally, the core network network element is a third communication device. The processor 1701is specifically further configured to:
receive a third subscription request or a third obtaining request sent by the third communication device.

The third operation includes at least one of the following:
sending the computing power information of the UE to the third communication device;
sending the computing power information of the second communication device to the third communication device; and
sending, to the third communication device, the computing power information collected by the second communication device.

Optionally, the core network network element is a first communication device. The processor 1701 is specifically configured to:
send a second subscription request or a second obtaining request to the first communication device; and
receive the computing power information of the first communication device sent by the first communication device.

Optionally, the core network network element is a third communication device. The processor 1701is specifically configured to:
send a first subscription request or a first obtaining request to the third communication device; and
receive the computing power information of the first communication device sent by the third communication device.

In a case that the communication device is a third communication device:

The processor 1701 is configured to perform a fourth operation. The fourth operation includes at least one of the following:
receiving computing power information of UE sent by the UE;
receiving the computing power information of the UE sent by a core network network element;
sending the computing power information of the UE to the core network network element;
receiving computing power information of a first communication device sent by the core network network element;
sending the computing power information of the first communication device to the core network network element;
sending the computing power information of the first communication device to the UE;
sending computing power information of a second communication device to the core network network element;
sending the computing power information of the second communication device to the UE;
sending, to the core network network element, computing power information collected by the second communication device;
sending, to the UE, the computing power information collected by the second communication device;
receiving the computing power information of the second communication device sent by the second communication device; and
receiving the computing power information that is collected by the second communication device and that is sent by the second communication device.

The computing power information indicates at least one of the following: used computing power, remaining computing power, available computing power, total computing power, a computing power type, and estimated duration of occupying computing power by a computing power task.

Optionally, the processor 1701 is specifically further configured to:
receive a computing power task that is sent by the core network network element or the UE and that matches computing power information of the third communication device;
   or
send, to the core network network element, the UE, or the second communication device, a computing power task matching the computing power information received by the third communication device.

Optionally, the processor 1701 is specifically further configured to:
receive a first subscription request or a first obtaining request sent by the UE.

The fourth operation includes at least one of the following:
sending the computing power information of the first communication device to the UE;
sending the computing power information of the second communication device to the UE; and
sending the computing power information collected by the second communication device to the UE.

Optionally, the core network network element is a first communication device. The processor 1701 is specifically further configured to:
send a second subscription request or a second obtaining request to the first communication device; and
receive the computing power information of the first communication device sent by the first communication device.

Optionally, the core network network element is a first communication device. The processor 1701 is specifically further configured to:
receive a first subscription request or a first obtaining request sent by the first communication device;
send a third subscription request or a third obtaining request to the second communication device;
receive the computing power information of the UE sent by the second communication device; and
send the computing power information of the UE to the first communication device.

Optionally, the core network network element is a second communication device. The processor 1701 is specifically further configured to:
receive a first subscription request or a first obtaining request sent by the second communication device; and
send the computing power information of the second communication device ti the first communication device.

Optionally, the core network network element is a second communication device. The processor 1701 is specifically further configured to:
send a third subscription request or a third obtaining request to the second communication device.

The fourth operation includes at least one of the following:
receiving the computing power information of the second communication device sent by the second communication device; and
receiving the computing power information that is collected by the second communication device and that is sent by the second communication device.

The communication device in this embodiment of this application can improve working performance of the communication system.

Specifically, the communication device in this embodiment of this application further includes: instructions or program stored in the memory 1702 and executable on the processor 1701. The processor 1701 calls the instructions or program in the memory 1702 to execute the method performed by the modules shown in FIG. 13, FIG. 14, or FIG. 15 and produce the same technical effects. To avoid repetition, details are not described herein again.

The embodiments of this application further provide a readable storage medium. The readable storage medium stores a program or instructions. The program or instructions, when executed by a processor, implement the processes of the foregoing embodiments of the method for obtaining computing power information and can achieve the same technical effects. To avoid repetition, details are not described herein again.

The processor is a processor in the terminal in the foregoing embodiments. The readable storage medium includes a computer-readable storage medium such as a computer read-only memory (Read-Only Memory, ROM), a random access memory (Random Access Memory, RAM), a magnetic disk, or an optical disc.

The embodiments of this application further provides a chip, including a processor and a communication interface. The communication interface is coupled to the processor, and the processor is configured to execute a program or instructions, to implement processes of the foregoing embodiments of the method for obtaining computing power information, and can achieve the same technical effects. To avoid repetition, details are not described herein again.

It should be noted that, the chip mentioned in embodiments of this application may also be referred to as a system-level chip, a system chip, a chip system, a system on chip, or the like.

It should be noted that terms "include", "comprise", and any variants thereof are intended to cover a non-exclusive inclusion. Therefore, in the context of a process, method, object, or apparatus that includes a series of elements, the process, method, object, or apparatus not only includes such elements, but also includes other elements not specified expressly, or may include inherent elements of the process, method, object, or device. Without more limitations, elements defined by a sentence "including one" does not exclude that there are still other same elements in the process, method, object, or apparatus. Besides, it should be noted that ranges of the method and apparatus in the implementations of this application are not limited to implementing functions in an order shown or discussed, but may include implementing functions according to the included functions in a substantially simultaneous manner or in a reverse order, for example, the described method may be performed in an order different than the described order. In addition, various steps may also be added, omitted, or combined. In addition, features described with reference to some examples may also be combined in other examples.

Through the descriptions of the foregoing implementations, a person skilled in the art may clearly understand that the method according to the foregoing embodiments may be implemented through software and a necessary general hardware platform, and certainly, may also be implemented by hardware, but in many cases, the former manner is a better implementation. Based on such an understanding, the technical solutions of this application essentially, or the part contributing to the related art, may be presented in the form of a computer software product. The computer software product is stored in a storage medium (for example, a ROM/RAM, a magnetic disk, or an optical disc) including several instructions to enable a terminal (which may be a mobile phone, a computer, a server, an air conditioner, a network device, or the like) to perform the methods described in embodiments of this application.

Although embodiments of this application have been described above with reference to the accompanying drawings, this application is not limited to the specific implementations described above, and the specific implementations described above are merely exemplary and not limitative. A person of ordinary skill in the art may make various variations under the teaching of this application without departing from the spirit of this application and the protection scope of the claims, and such variations shall all fall within the protection scope of this application.

## Claims

1. A method for obtaining computing power information, comprising:
performing, by a user equipment UE, a first operation, wherein the first operation comprises at least one of the following:
sending computing power information of the UE to a core network network element;
receiving computing power information of a first communication device sent by the core network network element;
receiving computing power information of a second communication device sent by the core network network element; and
receiving computing power information that is collected by the second communication device and that is sent by the core network network element, wherein
the computing power information indicates at least one of the following: used computing power, remaining computing power, available computing power, total computing power, a computing power type, and estimated duration of occupying computing power by a computing power task.

2. The method for obtaining computing power information according to claim 1, wherein after the performing, by a user equipment UE, a first operation, the method further comprises:
receiving a computing power task that is sent by the core network network element and that matches the computing power information of the UE;
or
sending, to the core network network element, a computing power task matching the computing power information received by the UE.

3. The method for obtaining computing power information according to claim 1, wherein the sending computing power information of the UE to a core network network element comprises:
sending the computing power information of the UE to the core network network element through non-access stratum NAS signaling.

4. The method for obtaining computing power information according to claim 3, wherein the NAS signaling comprises at least one of the following:
a protocol data unit PDU session establishment request;
a PDU session modification request;
a PDU session establishment response;
a PDU session modification response;
a registration request; and
registration completion.

5. The method for obtaining computing power information according to claim 1, wherein the sending computing power information of the UE to a core network network element comprises at least one of the following:
sending the computing power information of the UE to the first communication device, wherein the core network network element is the first communication device;
sending the computing power information of the UE to the second communication device, wherein the core network network element is the second communication device; and
sending the computing power information of the UE to the third communication device, wherein the core network network element is the third communication device.

6. The method for obtaining computing power information according to claim 1, wherein the receiving computing power information of a first communication device sent by the core network network element comprises:
receiving, through at least one of the following, the computing power information of the first communication device sent by the core network network element:
an extended protocol configuration option ePCO;
PDU session establishment acceptance;
PDU session modification acceptance;
a PDU session modification command; and
registration acceptance.

7. The method for obtaining computing power information according to claim 1, wherein the core network network element is a third communication device, and before the performing, by a user equipment UE, a first operation, the method further comprises:
sending a first subscription request or a first obtaining request to the third communication device, wherein
the first operation comprises at least one of the following:
receiving the computing power information of the first communication device sent by the third communication device;
receiving the computing power information of the second communication device sent by the third communication device; and
receiving computing power information that is collected by the second communication device and that is sent by the third communication device.

8. The method for obtaining computing power information according to claim 1, wherein the method further comprises:
sending the computing power information of the UE through an operating system OS or a module chip to an application installed on the UE.

9. The method for obtaining computing power information according to claim 8, wherein before the sending the computing power information of the UE through an operating system OS or a module chip to an application installed on the UE, the method further comprises:
receiving a request for obtaining the computing power information of the UE sent by the application.

10. A method for obtaining computing power information, comprising:
performing, by a first communication device, a second operation, wherein the second operation comprises at least one of the following:
sending computing power information of the first communication device to a core network network element;
sending the computing power information of the first communication device to UE;
receiving computing power information of the UE sent by the core network network element; and
receiving the computing power information of the UE sent by the UE, wherein
the computing power information indicates at least one of the following: used computing power, remaining computing power, available computing power, total computing power, a computing power type, and estimated duration of occupying computing power by a computing power task.

11. The method for obtaining computing power information according to claim 10, wherein after the performing, by a first communication device, a second operation, the method further comprises:
receiving a computing power task that is sent by the core network network element or the UE and that matches the computing power information of the first communication device;
or
sending, to the core network network element or the UE, a computing power task matching the computing power information received by the first communication device.

12. The method for obtaining computing power information according to claim 10, wherein after the receiving the computing power information of the UE sent by the UE, the method further comprises:
sending the computing power information of the UE to the core network network element.

13. The method for obtaining computing power information according to claim 10, wherein the second operation comprises: sending the computing power information of the first communication device to the core network network element;
before the performing, by a first communication device, a second operation, the method further comprises:
receiving a second subscription request or a second obtaining request sent by the core network network element; and
the core network network element comprises at least one of the following:
a second communication device, a third communication device, and a fourth communication device.

14. The method for obtaining computing power information according to claim 10, wherein the receiving computing power information of the UE sent by the core network network element comprises:
sending a first subscription request or a first obtaining request to the third communication device; and
receiving the computing power information of the UE sent by the third communication device, wherein the core network network element is the third communication device.

15. A method for obtaining computing power information, comprising:
performing, by a second communication device, a third operation, wherein the third operation comprises at least one of the following:
receiving computing power information of UE sent by the UE;
receiving the computing power information of the UE sent by a core network network element;
sending the computing power information of the UE to the core network network element;
receiving computing power information of a first communication device sent by the core network network element;
sending computing the power information of the first communication device to the core network network element;
sending the computing power information of the first communication device to the UE;
sending computing power information of the second communication device to the core network network element;
sending the computing power information of the second communication device to the UE;
sending, to the core network network element, computing power information collected by the second communication device; and
sending, to the UE, the computing power information collected by the second communication device, wherein
the computing power information indicates at least one of the following: used computing power, remaining computing power, available computing power, total computing power, a computing power type, and estimated duration of occupying computing power by a computing power task.

16. The method for obtaining computing power information according to claim 15, wherein after the performing, by a second communication device, a third operation, the method further comprises:
receiving a computing power task that is sent by the core network network element or the UE and that matches the computing power information of the second communication device;
or
sending, to the core network network element or the UE, a computing power task matching the computing power information received by the second communication device.

17. The method for obtaining computing power information according to claim 15, wherein the core network network element is a third communication device, and before the performing, by a second communication device, a third operation, the method further comprises:
receiving a third subscription request or a third obtaining request sent by the third communication device; and
the third operation comprises at least one of the following:
sending the computing power information of the UE to the third communication device;
sending the computing power information of the second communication device to the third communication device; and
sending, to the third communication device, the computing power information collected by the second communication device.

18. The method for obtaining computing power information according to claim 15, wherein the core network network element is the first communication device, and the receiving computing power information of a first communication device sent by the core network network element comprises:
sending a second subscription request or a second obtaining request to the first communication device; and
receiving the computing power information of the first communication device sent by the first communication device.

19. The method for obtaining computing power information according to claim 15, wherein the core network network element is the third communication device, and the receiving computing power information of a first communication device sent by the core network network element comprises:
sending a first subscription request or a first obtaining request to the third communication device; and
receiving the computing power information of the first communication device sent by the third communication device.

20. A method for obtaining computing power information, comprising:
performing, by a third communication device, a fourth operation, wherein the fourth operation comprises at least one of the following:
receiving computing power information of UE sent by the UE;
receiving the computing power information of the UE sent by a core network network element;
sending the computing power information of the UE to the core network network element;
receiving computing power information of a first communication device sent by the core network network element;
sending the computing power information of the first communication device to the core network network element;
sending the computing power information of the first communication device to the UE;
sending computing power information of a second communication device to the core network network element;
sending the computing power information of the second communication device to the UE;
sending, to the core network network element, computing power information collected by the second communication device;
sending, to the UE, the computing power information collected by the second communication device;
receiving the computing power information of the second communication device sent by the second communication device; and
receiving the computing power information that is collected by the second communication device and that is sent by the second communication device, wherein
the computing power information indicates at least one of the following: used computing power, remaining computing power, available computing power, total computing power, a computing power type, and estimated duration of occupying computing power by a computing power task.

21. The method for obtaining computing power information according to claim 20, wherein after the performing, by a third communication device, a fourth operation, the method further comprises:
receiving a computing power task that is sent by the core network network element or the UE and that matches computing power information of the third communication device;
or
sending, to the core network network element, the UE, or the second communication device, a computing power task matching the computing power information received by the third communication device.

22. The method for obtaining computing power information according to claim 20, wherein before the performing, by a third communication device, a fourth operation, the method further comprises:
receiving a first subscription request or a first obtaining request sent by the UE; and
the fourth operation comprises at least one of the following:
sending the computing power information of the first communication device to the UE;
sending the computing power information of the second communication device to the UE; and
sending the computing power information collected by the second communication device to the UE.

23. The method for obtaining computing power information according to claim 20, wherein the core network network element is the first communication device, and the receiving computing power information of a first communication device sent by the core network network element comprises:
sending a second subscription request or a second obtaining request to the first communication device; and
receiving the computing power information of the first communication device sent by the first communication device.

24. The method for obtaining computing power information according to claim 20, wherein the core network network element is the first communication device, and the sending the computing power information of the UE to the core network network element comprises:
receiving a first subscription request or a first obtaining request sent by the first communication device;
sending a third subscription request or a third obtaining request to the second communication device;
receiving the computing power information of the UE sent by the second communication device; and
sending the computing power information of the UE to the first communication device.

25. The method for obtaining computing power information according to claim 20, wherein the core network network element is the second communication device, and the sending the computing power information of the first communication device to the core network network element comprises:
receiving a first subscription request or a first obtaining request sent by the second communication device; and
sending the computing power information of the second communication device ti the first communication device.

26. The method for obtaining computing power information according to claim 20, wherein the core network network element is the second communication device, and before the performing, by a third communication device, a fourth operation, the method further comprises:
sending a third subscription request or a third obtaining request to the second communication device; and
the fourth operation comprises at least one of the following:
receiving the computing power information of the second communication device sent by the second communication device; and
receiving the computing power information that is collected by the second communication device and that is sent by the second communication device.

27. An apparatus for obtaining computing power information, wherein UE comprises the apparatus for obtaining computing power information, and the apparatus for obtaining computing power information comprises:
a first execution module, configured to perform a first operation, wherein the first operation comprises at least one of the following:
sending computing power information of the UE to a core network network element;
receiving computing power information of a first communication device sent by the core network network element;
receiving computing power information of a second communication device sent by the core network network element; and
receiving computing power information that is collected by the second communication device and that is sent by the core network network element, wherein
the computing power information indicates at least one of the following: used computing power, remaining computing power, available computing power, total computing power, a computing power type, and estimated duration of occupying computing power by a computing power task.

28. An apparatus for obtaining computing power information, wherein a first communication device comprises the apparatus for obtaining computing power information and the apparatus for obtaining computing power information comprises:
a second execution module, configured to perform a second operation, wherein the second operation comprises at least one of the following:
sending computing power information of the first communication device to a core network network element;
sending the computing power information of the first communication device to UE;
receiving computing power information of the UE sent by the core network network element; and
receiving the computing power information of the UE sent by the UE, wherein
the computing power information indicates at least one of the following: used computing power, remaining computing power, available computing power, total computing power, a computing power type, and estimated duration of occupying computing power by a computing power task.

29. An apparatus for obtaining computing power information, wherein a second communication device comprises the apparatus for obtaining computing power information and the apparatus for obtaining computing power information comprises:
a third execution module, configured to perform a third operation, wherein the third operation comprises at least one of the following:
receiving computing power information of UE sent by the UE;
receiving the computing power information of the UE sent by a core network network element;
sending the computing power information of the UE to the core network network element;
receiving computing power information of a first communication device sent by the core network network element;
sending computing the power information of the first communication device to the core network network element;
sending the computing power information of the first communication device to the UE;
sending computing power information of the second communication device to the core network network element;
sending the computing power information of the second communication device to the UE;
sending, to the core network network element, computing power information collected by the second communication device; and
sending, to the UE, the computing power information collected by the second communication device, wherein
the computing power information indicates at least one of the following: used computing power, remaining computing power, available computing power, total computing power, a computing power type, and estimated duration of occupying computing power by a computing power task.

30. An apparatus for obtaining computing power information, wherein a third communication device comprises the apparatus for obtaining computing power information and the apparatus for obtaining computing power information comprises:
a fourth execution module, configured to perform a fourth operation, wherein the fourth operation comprises at least one of the following:
receiving computing power information of UE sent by the UE;
receiving the computing power information of the UE sent by a core network network element;
sending the computing power information of the UE to the core network network element;
receiving computing power information of a first communication device sent by the core network network element;
sending the computing power information of the first communication device to the core network network element;
sending the computing power information of the first communication device to the UE;
sending computing power information of a second communication device to the core network network element;
sending the computing power information of the second communication device to the UE;
sending, to the core network network element, computing power information collected by the second communication device;
sending, to the UE, the computing power information collected by the second communication device;
receiving the computing power information of the second communication device sent by the second communication device; and
receiving the computing power information that is collected by the second communication device and that is sent by the second communication device, wherein
the computing power information indicates at least one of the following: used computing power, remaining computing power, available computing power, total computing power, a computing power type, and estimated duration of occupying computing power by a computing power task.

31. UE, comprising a processor, a memory, and a program or instructions stored in the memory and executable on the processor, wherein in a case that the program or instructions are executed by the processor, the steps in the method for obtaining computing power information according to any one of claims 1 to 9 are implemented.

32. A communication device, comprising a processor, a memory, and a program or instructions stored in the memory and executable on the processor, wherein in a case that the program or instructions are executed by the processor, the steps in the method for obtaining computing power information according to any one of claims 10 to 14 are implemented, or in a case that the program or instructions are executed by the processor, the steps in the method for obtaining computing power information according to any one of claims 15 to 19 are implemented, or in a case that the program or instructions are executed by the processor, the steps in the method for obtaining computing power information according to any one of claims 20 to 26 are implemented.

33. A readable storage medium, storing a program or instructions, wherein in a case that the program or instructions are executed by the processor, the steps in the method for obtaining computing power information according to any one of claims 1 to 9 are implemented, or in a case that the program or instructions are executed by the processor, the steps in the method for obtaining computing power information according to any one of claims 10 to 14 are implemented, or in a case that the program or instructions are executed by the processor, the steps in the method for obtaining computing power information according to any one of claims 15 to 19 are implemented, or in a case that the program or instructions are executed by the processor, the steps in the method for obtaining computing power information according to any one of claims 20 to 26 are implemented.
